# EUROPÄISCHE PATENTSCHRIFT

(11) **EP 3 626 523 B1**
(45) Veröffentlichungstag und Bekanntmachung des Hinweises auf die Patenterteilung: **06.01.2021**
(21) Anmeldenummer: 19197240.5
(22) Anmeldetag: 13.09.2019
(51) Int. Cl.: B60N 2/64, B60N 2/68, B60N 2/02, B60N 2/06, B60N 2/20, B60N 2/30, B60N 2/821, B60N 2/832, B60N 2/856

(54) **FAHRZEUGSITZ FÜR NUTZFAHRZEUGKABINEN**
VEHICLE SEAT FOR COMMERCIAL VEHICLE CABINS
SIÈGE DE VÉHICULE POUR CABINES DES VÉHICULES UTILITAIRES

(30) Priorität: 19.09.2018 DE 102018122959; 21.08.2019 DE 102019122542
(43) Veröffentlichungstag der Anmeldung: 25.03.2020
(73) Patentinhaber: GRAMMER AG, 92289 Ursensollen (DE)
(72) Erfinder: Ott, Richard, 92245 Kümmersbruck (DE); Fischer, Johann, 92286 Rieden (DE); Hegen, Martin, 92421 Schwandorf (DE)
(74) Vertreter: Hannke, Christian

(56) Entgegenhaltungen:
- EP-A1- 1 040 958
- EP-A1- 2 873 555
- DE-A1-102009 019 348
- DE-A1-102009 033 883

## Beschreibung

Die Erfindung betrifft einen Fahrzeugsitz mit einer Erstreckung entlang einer Höhenachse Z und einer Breitenachse Y, umfassend ein Sitzteil und ein Rückenlehnenelement, welches sich entlang einer Höhenachse Z' und in einer Breitenachse Y' erstreckt.

Fahrzeugsitze mit Rückenlehnenelementen sind aus dem Stand der Technik hinlänglich bekannt. In Nutzfahrzeugkabinen ist es oft wünschenswert, dass deren Innenraum auf verschiedenste Art und Weise benutzt werden kann, beispielsweise für die Zur-Verfügungstellung eines Schlafplatzes oder eines Kochplatzes. Häufig ist jedoch in Nutzfahrzeugkabinen, die serienmäßig gebaut werden, der zur Verfügung stehende Innenbereich räumlich begrenzt. Die Fahrzeugsitze, insbesondere der Beifahrersitz sollten somit platzsparend verstaubar, beziehungsweise zusammenklappbar sein.

Bei Nutzfahrzeugen ist davon auszugehen, dass die Personen sich für lange Zeiten in den Fahrzeugsitzen aufhalten müssen. Es ist demnach wünschenswert, dass die Fahrzeugsitze Fehlhaltungen vermeiden und eine maximale Bequemlichkeit gewährleisten.

Darüber hinaus ist es wünschenswert, dass die Fahrzeugsitze möglichst wenig Eigengewicht haben, um das Gewicht des Nutzfahrzeugs zu senken. Ebenso sollen die Fahrzeugsitze möglichst günstig herzustellen sein, ohne dabei die Stabilitäts- und Sicherheitsanforderungen zu beeinträchtigen.

Die Druckschrift DE 10 2009 033883 A1 offenbart einen Fahrzeugsitz mit einer Rückenlehne, die zumindest in einem seitlich mittleren Bereich eine stützende Strebenstruktur für zumindest ein den Sitzbenutzer stützendes Polsterteil aufweist. Diese Strebenstruktur umfasst ein nach oben ragendes Stützelement, welches an einem Stützteil angeordnet ist. Das Stützteil weist ein in Fahrzeugquerrichtung verlaufendes Basisteil welches an einem Sitzteil, um eine Schwenkachse verschwenkbar angeordnet ist.

Die Druckschrift EP 2 873 555 A1 zeigt einen einen Sitzunterbau umfassenden Fahrzeugsitz. Der Sitzunterbau weist eine Verlagerungseinrichtung in Form eines Schienensystems auf. Auf dem Sitzunterbau ist ein Sitzpolster derart angeordnet, dass dieses mittels einer Hebeeinrichtung in Höhenrichtung verkippbar ist. Ferner ist an dem Sitzunterbau eine Rückenlehne angeordnet. Hierzu ist eine mittig angeordnete Stützanordnung an einem sich entlang der Breitenachse erstreckenden Rohrelement, welches mit dem Sitzunterbau verbunden ist, angeordnet. Die Stützanordnung umfasst ein Hauptelement und ein bewegliches Element, welches entlang der Höhenrichtung relativ zu dem Hauptelement verlagerbar ist und an welchem das Rückenlehnenelement angeordnet ist.

Aufgabe der vorliegenden Erfindung ist es deshalb einen Fahrzeugsitz bereitzustellen, welcher die eingangs beschriebenen Probleme löst.

Gelöst werden die Aufgaben von einem Fahrzeugsitz gemäß Anspruch 1. Weitere bevorzugte Ausführungsformen sind in den Unteransprüchen beschrieben.

Der erfindungsgemäße Fahrzeugsitz mit einer Erstreckung entlang einer Höhenachse Z und einer Breitenachse Y, umfasst ein Sitzteil und ein Rückenlehnenelement, welches sich entlang einer Höhenachse Z' und in einer Breitenachse Y' erstreckt. Dabei weist das Rückenlehnenelement eine sich entlang der Höhenrichtung Z1 erstreckende Zentralstruktur auf, welche entlang der Breitenachse Y' mittig angeordnet ist und in einer sich im Wesentlichen entlang der Breitenachse Y' erstreckenden Basisstruktur mündet, wobei das Rückenlehnenelement zumindest ein Stabilitätselement aufweist, welches sich entlang der Breitenachse Y' von der Zentralstruktur wegerstreckt, wobei die Basisstruktur in einer Haltestruktur des Fahrzeugsites schwenkbar angeordnet ist, so dass das Rückenlehnenelement um eine erste Schwenkachse schwenkbar ist, wobei die erste Schwenkachse entlang einer Höhenachse Z des Fahrzeugsitzes von dem Sitzteil beabstandet ist.

Der erfindungsgemäße Fahrzeugsitz kann dabei als ein Fahrersitz oder als ein Beifahrersitz vorgesehen sein.

Der Fahrzeugsitz erstreckt sich somit entlang einer Höhenachse Z einer Breitenachse Y und einer Tiefenachse X. Den jeweiligen Achsen sind jeweils zwei Richtungen zuzuordnen. So umfasst die Höhenachse Z die Richtungen Z1 (nach oben) und Z2 (nach unten). Die Breitenachse Y umfasst die Richtungen Y1 (nach rechts) und Y2 (nach links). Die Tiefenachse X umfasst die Richtungen X1 (nach vorne) und X2 (nach hinten).

Das Rückenlehnenelement erstreckt sich entlang einer Höhenachse Z', einer Breitenachse Y' und einer Tiefenachse X'. Diesen jeweiligen Achsen sind ebenso zwei Richtungen zuzuordnen. So umfasst die Höhenachse Z' die Richtungen Z'1 (nach oben) und Z'2 (nach unten). Die Breitenachse Y' umfasst die Richtungen Y'1 (nach rechts) und Y'2 (nach links). Die Tiefenachse X' umfasst die Richtungen X'1 (nach vorne) und X'2 (nach hinten).

Der verwendete Ausdruck "im Wesentlichen" soll dahingehend auszulegen sein, dass auch geringfügige Toleranzabweichungen mit beansprucht werden. So kann die Abweichung einen Winkel von bevorzugt kleiner 10° weiter bevorzugt kleiner 7,5°, noch weiter bevorzugt kleiner 5° betragen. Dies gilt auch für die im Folgenden verwendeten Ausdrücke "im Wesentlichen".

In einem bevorzugten Ausgangszustand wären die Achsen Z, Y, X des Fahrzeugsitzes, beziehungsweise die zugeordneten Richtungen parallel zu den Achsen Z', Y', X' des Rückenlehnenelementes, beziehungsweise zu den entsprechend zugeordneten Richtungen. Bei einer erfindungsgemäßen Verschwenkung um die erste Schwenkachse würden die Höhenachse des Fahrzeugsitzes und die Höhenachse des Rückenlehnenelementes einen Winkel α einschließen, welcher bevorzugt größer 0° ist und bevorzugt kleiner ±90° ist. Der Winkel α würde demnach in dem Intervall]0°, ±90°] liegen. Ebenso würden die Tiefenachsen X und X' einen entsprechenden Winkel einschließen.

Unter einem Stabilitätselement sind Elemente zu verstehen, welche zur Abstützung/Stabilisierung der sich im Sitz befindlichen Person dient. Derartige Stabilitätselemente können beispielsweise Verstrebungen, Verstrebungselemente oder plattenartige Elemente sein. Vorzugsweise können die Stabilitätselemente zur Abstützung bestimmter Körperregionen vorgesehen sein. So kann beispielsweise eine Abstützung des unteren Rückens, beziehungsweise des Lendenwirbelbereiches, des oberen Rückens, beziehungsweise des Schulterbereich und des Kopfes vorgesehen sein. Die Stabilitätselemente erstrecken sich von der Zentralstruktur oder auch Längsstruktur weg. Diese Zentralstruktur kann vorteilhafterweise die auf die Stabilitätselemente wirkenden Kräfte aufnehmen und in die Basisstruktur einleiten, da diese kräfteaufnehmende Zentralstruktur sich auf die Basisstruktur stützt. Die Basisstruktur ist mit der kräfteaufnehmenden Zentralstruktur fest verbunden, beziehungsweise mit dieser integral ausgebildet. Unter "integral ausgebildet" ist zu verstehen, dass die beiden Elemente einstückig, beziehungsweise einteilig, ausgebildet sind. Eine feste Verbindung der Basisstruktur mit der Zentralstruktur kann beispielsweise durch eine Fixierung, beispielsweise durch eine Schraubverbindung, eine Steckverbindung, eine Nietenverbindung oder eine Schweißverbindung erfolgen.

Die erste Schwenkachse verläuft vorteilhafterweise zumindest abschnittsweise durch die Basisstruktur und die Haltestruktur. Die zentral angeordnete rückseitige Zentralstruktur ist erfindungsgemäß unterseitig auf einer vorzugsweise horizontal, beziehungsweise entlang der Breitenachse Y des Fahrzeugsitzes oder in Anlehnung an die Horizontale, beziehungsweise der Breitenachse Y ausgerichtete Schwenkachse abgestützt. Auf diese Weise sind diese rückseitige Zentralstruktur/Längsstruktur und die Schwenkachse dazu geeignet, die Rückenlehne nach vorne und nach hinten zu verschwenken, wobei entscheidend ist, dass diese Schwenkachse gegenüber dem Sitzteil erhöht in der Haltestruktur, welches sich von dem Sitzteil in seiner Rückseite nach oben erstreckt, angeordnet ist.

Erfindungsgemäß ist die erste Schwenkachse in einer Höhenrichtung Z des Fahrzeugsitzes von dem Sitzteil beabstandet. Vorzugsweise verläuft die Schwenkachse zumindest abschnittsweise durch die Basisstruktur. Demnach ist es ebenso bevorzugt, dass die Basisstruktur von dem Sitzteil beabstandet ist.

Vorteilhafterweise ist der Abstand zwischen der Schwenkachse und dem Sitzteil derart bemessen, dass die Schwenkachse sich im Bereich der Lendenwirbelsäule befindet.

Vorteilhafterweise umfasst das Sitzteil ein Polsterelement, auf welchem die Person sitzt. Ferner kann das Sitzteil ein entsprechendes Aufnahmeelement umfassen, welcher das Polsterelement aufnimmt, beziehungsweise hält. Ferner ist es vorteilhaft, wenn das Rückenlehnenelement mit zumindest einem Polsterelement versehen ist. Bevorzugt wird das zumindest eine Polsterelement von dem zumindest einem Stabilitätselement gehalten. Das Rückenlehnenelement und das zumindest eine Polsterelement bilden demnach vorteilhafterweise die Rückenlehne des Fahrzeugsitzes. Natürlich wäre es auch denkbar, dass weder auf dem Sitzteil noch auf dem Rückenlehenelement ein Polsterelement vorgesehen ist. Demnach wären lediglich eine Sitzfläche, beziehungsweise eine Abstützfläche vorgesehen, welche den Nutzer kontaktieren.

Die bevorzugten Polsterelemente an dem Rückenlehnenelement ragen entlang der Tiefenrichtung X'1 nach vorn. Demnach ist es bevorzugt, dass ein erster Abstand zwischen der Schwenkachse und dem Sitzteil zumindest einem zweiten Abstand entspricht, welcher zwischen der Polsteroberfläche in einem unteren Drittel der Rückenoberfläche und der Schwenkachse besteht, entspricht. Dabei ist der erste Abstand ausgehend von der Oberfläche des Sitzteils, welche in Kontakt mit dem Nutzer ist, welche vorteilhafterweise die Oberfläche des entsprechenden Polsterelement ist. Durch eine derartige Ausgestaltung des ersten Abstands ist es möglich die Rückenlehen, beziehungsweise das Rückenlehnenelement um -90° nach vorne zu schwenken. Die Zentralstruktur wäre dann im Wesentlichen parallel zu dem Sitzteil angeordnet. Ebenso würde die Höhenachse Z' des Rückenlehnenelementes im Wesentlichen parallel zu der Tiefenachse des Fahrzeugsitzes angeordnet sein. Unter dem Ausdruck "im Wesentlichen" ist eine geringe Toleranzabweichung zu verstehen. Eine solche Abweichung von der Parallelität der genannten Elemente, beziehungsweise Achsen, kann in einem Bereich von 0° bis 10° vorzugsweise in einem Bereich zwischen 0° und 7,5°, weiter bevorzugt in einem Bereich von 0° bis 5° liegen. Durch das im Wesentlichen parallel zu dem Sitzteil angeordnete Rückenlehnenelement kann der Fahrzeugsitz besonders platzsparend verstaut werden.
Ein vorteilhafter Beifahrerfahrzeugsitz, beziehungsweise Fahrersitz, kann demnach platzsparend im hinteren Bereich der Nutzfahrzeugkabine im abgeklappten Zustand verstaut werden. Hierdurch kann ein erhöhter Platzbedarf im vorderen Bereich der Nutzfahrzeugkabine, beispielsweise für den Aufbau eines Tisches zum Einnehmen eines Essens zur Verfügung gestellt werden.

Ein derartiger vorteilhafter Beifahrer- oder Fahrersitz lässt sich derart verändern, dass das gesamte Rückenlehnenelement bis auf das Sitzteil herunterzuklappen ist, sodass eine Rückseite des Rückenlehnenelements nahezu horizontal angeordnet ist. Anschließend lässt sich dieser Fahrzeugsitz im eingeklappten Zustand vorzuzugsweise nach hinten verschieben. Hierzu kann vorteilhafterweise ein Führungssystem vorgesehen sein. Dieses Führungssystem kann vorteilhafterweise am Karosserieboden eingelassene Schienen oder aufgesetzte Schienen umfassen. Dabei ist es von Vorteil, dass hierzu der Sitz an seiner Unterseite komplementär ausgebildete Schienenelemente oder Rollenelemente oder Gleitsteine oder dergleichen aufweist, um eine Verschiebung in Vorwärts- und Rückwärtsrichtung des Fahrzeugsitzes zu ermöglichen.

Vorteilhafterweise kann der Fahrzeugsitz im aufgeklappten Zustand, also wenn er im vorderen Bereich der Nutzfahrzeugkabine in seinem regulären Fahrzustand angeordnet ist, mittels einer Arretierungseinrichtung arretiert werden, um die Fahrsicherheit für die Person zu gewährleisten. Diese Arretierungseinrichtung kann beispielsweise mittels eines Hebelelements oder eines Bowdenzugs bedient werden.

Vorzugsweise kann der Fahrzeugsitz im eingeklappten Zustand, wenn er nach hinten in den hinteren Bereich der Nutzfahrzeugkabine unterhalb eines Schlafbettes oder dergleichen angeordnet ist, ebenso arretiert werden. Dies kann mittels der Arretierungseinrichtung erfolgen oder mittels zusätzlicher Einrastelemente.

Vorteilhafterweise liegt der erste Abstand zwischen der Schwenkachse und dem Sitzteil in einem Bereich zwischen 2 cm und 30 cm, weiter bevorzugt liegt der erste Abstand in einem Bereich zwischen 5 cm und 25 cm. Noch weiter bevorzugt liegt der erste Abstand in einem Bereich zwischen 5 cm und 15 cm.

Vorzugsweise ist die Schwenkachse in horizontaler Richtung verlaufend hinter dem Rückenlehnenelement 4 angeordnet und hält zugleich das gesamte Rückenlehenelement. Das Rückenlehnenelement ist bevorzugt von dem Sitzteil getrennt angeordnet.

Vorteilhafterweise ist die Haltestruktur des Rückenlehnenelementes oder auch Rückenlehnenkonstruktion genannt, ein Aufnahmerahmen. Nach einer bevorzugten Ausführungsform weist die Haltestruktur zwei sich entlang der Höhenachse Z des Fahrzeugsitzes erstreckende Halteschenkel, beziehungsweise U-Schenkel auf. Vorteilhafterweise sind die Halteschenkel am Sitzteil an jeweils einem entlang der Breitenachse Y des Fahrzeugsitzes äußeren Rand des Sitzteils angeordnet.

Vorteilhafterweise ist die Haltestruktur U-förmig ausgebildet. Bevorzugt weist die Haltestruktur eine sich entlang der Breitenachse Y erstreckende Querverstrebung auf, welche die beiden Halteschenkel verbindet. Die Querverstrebung der U-förmigen Haltestruktur ist dabei vorteilhafterweise in dem Sitzteil integriert oder ein Abschnitt des Sitzteils.

Vorteilhafterweise umfasst das Sitzteil ein Aufnahmeelement für das Polsterelement oder die Sitzfläche. Dieses Aufnahmeelement kann derart gefertigt sein, dass es eine entsprechende Stabilität aufweist, welche ausreichend für einen entsprechenden Kräfteeintrag durch die Halteschenkel ist. Es wäre somit denkbar, dass die Haltestruktur aus den Halteschenkeln und einem Abschnitt des Sitzteils, beziehungsweise des Aufnahmeelements für das Polsterelement oder die Sitzfläche vorzugsweise ein Abschnitt, welcher sich entlang der Breitenrichtung Y erstreckt, besteht. Es wäre jedoch auch denkbar, dass die Querverstrebung in oder an dem Sitzteil angeordnet wird. Dies ist vor allem dann vorteilhaft, wenn das Sitzteil, beziehungsweise die Aufnahme für das Polsterelement nicht ausreichend für den Krafteintrag durch die Haltelemente ausgelegt sind. Die Querverstrebung könnte vorteilhafterweise mit einem Sitzunterbau, mittels welchem der Sitz mit der Fahrzeugkarosserie verbunden ist, verbunden sein.

Die Haltestruktur kann demnach vorzugsweise einteilig oder mehrteilig ausgebildet sein.

Erfindungsgemäß umfasst das Rückenlehnenelement einen unteren Teil, welcher entlang der Höhenachse Z' unter der ersten Schwenkachse angeordnet ist und einen oberen Teil, welcher entlang der Höhenachse Z' über der ersten Schwenkachse angeordnet ist. Da sich die erste Schwenkachse erhöht, also mit einem gewissen Abstand von dem Sitzteil erstreckt, kann das Rückenlehnenelement, beziehungsweise die rückseitige Zentralstruktur mit dem zumindest einem Stabilitätselement nach vorne und nach hinten schwenken. Bei einer Verschwenkung des oberhalb der ersten Schwenkachse liegenden oberen Teils des Rückenlehnenelementes nach hinten, also in Richtung X2, wird gleichzeitig der unterhalb der ersten Schwenkachse liegende untere Teil des Rückenlehnenelementes nach vorne, also entlang der Richtung X1, verschwenkt. Hierdurch kann eine vorteilhafte Lordose-/Kyphose-Unterstützung herbeigeführt werden.

Nach einer weiteren bevorzugten Ausführungsform ist die Basisstruktur formstabil ausgebildet. Hierdurch wird die Einleitung der Kräfte durch die Zentralstruktur ermöglicht und eine entsprechende Stabilität gewährleistet. Die Basisstruktur kann bogenartig ausgebildet sein, so dass die Basisstruktur eine Erstreckung nach hinten, also entlang der Tiefenrichtung X'2, aufweist. Bevorzugt ist die Basisstruktur integral d. h. einteilig und/oder einstückig mit der Zentralstruktur ausgebildet. Vorzugsweise weist die Basisstruktur an seinen entlang der Breitenachse Y' des Rückenlehnenelementes äußeren Rändern ein Lagerwellenelement auf, welches in einer Schwenklagerung eines Halteschenkels drehbar, beziehungsweise schwenkbar angeordnet ist. Es wäre denkbar, dass ein Lagerwellenelement über die gesamte Breite der Basisstruktur durch die Basisstruktur verläuft und in den Schwenklagerungen der beiden Halteschenkel angeordnet ist. Es wäre jedoch auch möglich, dass an den jeweiligen Rändern der Basisstruktur eine Aufnahme vorgesehen ist, in welcher jeweils ein Lagerwellenelement fest angeordnet ist. Das jeweilige Lagerwellenelement ist dann in der entsprechenden Schwenklagerung des Halteschenkels gelagert. Vorteilhafterweise umfasst die Schwenklagerung an dem jeweiligen Halteschenkel eine Aufnahme für das jeweilige Lagerwellenelement, beziehungsweise für das jeweilige Ende des durchlaufenden Lagerwellenelements. Diese Aufnahme ist vorzugsweise derart ausgestaltet, dass eine leichtläufige Rotation des Lagerwellenelements ermöglicht ist. Dies kann beispielsweise durch ein Kugellager ermöglicht werden.

Nach einer bevorzugten Ausführungsform ist die Schwenklagerung der Halteschenkel entlang der Höhenrichtung Z einstellbar. Hierdurch kann der Abstand zwischen der ersten Schwenkachse und dem Sitzteil einstellbar sein. Die Lordose-/Kyphose-Unterstützung könnte somit an den Nutzer angepasst werden.

Nach einer weiteren bevorzugten Ausführungsform umfasst der Fahrzeugsitz einen Verriegelungsmechanismus, mittels welchem die Schwenkung des Rückenlehnenelementes um die erste Schwenkachse verriegelbar ist. Durch das Vorsehen eines Verriegelungsmechanismus kann eine gewünschte Neigung des Rückenlehenelements festgelegt werden. Ein solcher Verriegelungsmechanismus kann beispielsweise eine lösbare Verzahnung eines Riegelelements in einem Zahnelement umfassen. Vorteilhafterweise weist das Zahnelement einen kreissegmentförmigen Abschnitt auf und das Riegelelement ist mit einer Federkraft beaufschlagt. Über ein Bedienelement kann die Verzahnung gelöst werden. Ein solches Bedienelement könnte ein Hebelelement, ein Stellantrieb oder ein Bowdenzug sein. Vorteilhafterweise könnte der Verriegelungsmechanismus an der Schwenklagerung des Lagerwellenelementes vorgesehen oder in dieser integriert sein.

Nach einer weiteren bevorzugten Ausführungsform umfasst der Fahrzeugsitz einen Rückstellmechanismus, mittels welchem eine Schwenkung des Rückenlehnenelementes um die erste Schwenkachse zu einer Ausgangsposition hin rückstellbar ist. Diese Ausgangsposition könnte vorzugsweise die Position sein, in welcher das Rückenlehnenelement im Wesentlichen senkrecht zum Sitzteil ausgerichtet ist. Der Rückstellmechanismus kann beispielsweise ein elastisches Element oder eine Torsionsfeder umfassen. Vorteilhafterweise könnte der Rückstellmechanismus an der Schwenklagerung des Lagerwellenelementes vorgesehen oder in dieser integriert sein.

Nach einer weiteren bevorzugten Ausführungsform umfasst das Rückenlehnenelement ein Stabilitätselement in Form eines ersten plattenartigen Elementes. Vorzugsweise ist das erste plattenartige Element entlang der Höhenachse Z' in einem unteren Bereich der Zentralstruktur angeordnet. Bevorzugt erstreckt sich das erste plattenartige Element entlang der Höhenachse Z' des Rückenlehnenelementes über die Schwenkachse hinaus in Richtung des Sitzteils. Bevorzugt erstreckt sich das erste plattenartige Element entlang der Höhenachse Z' des Rückenlehnenelementes über die Basisstruktur hinaus in Richtung des Sitzteils. Vorteilhafterweise ist der untere Teil des Rückenlehnenelementes der über die Schwenkachse hinausragende untere Abschnitt des ersten plattenartigen Elements. Die bevorzugte Erstreckung des ersten plattenartigen Elements ist nicht unwesentlich. Vorteilhafterweise erstreckt sich das erste plattenartige Element zumindest zwei Drittel des Abstands zwischen der Schwenkachse und dem Sitzteil, beziehungsweise der Sitzteiloberfläche. Weiter bevorzugt erstreckt sich das erste plattenartige Element zumindest drei Viertel des Abstands zwischen der Schwenkachse und dem Sitzteil, beziehungsweise der Sitzteiloberfläche. Vorteilhafterweise kontaktiert das auf dem Rückenlehenelement angeordnete Polsterelement, das Polsterelement des Sitzteils.

Nach einer weiteren vorteilhaften Ausführungsform ist das erste plattenartige Element schwenkbar an der Zentralstruktur angeordnet und/oder zumindest abschnittsweise flexibel ausgebildet. Vorteilhafterweise ist hierdurch eine Verschwenkung und/oder eine Verformung des ersten plattenartigen Elementes in radialer Richtung um eine zweite Schwenkachse ermöglicht. Die zweite Schwenkachse erstreckt sich bevorzugt im Wesentlichen entlang der Höhenachse Z'. Der verwendete Ausdruck "im Wesentlichen" soll dahingehend auszulegen sein, dass auch geringfügige Toleranzabweichungen mit beansprucht werden. So kann die Abweichung einen Winkel von bevorzugt kleiner 10°, weiter bevorzugt kleiner 7,5°, noch weiter bevorzugt kleiner 5° betragen. Vorzugsweise verläuft die zweite Schwenkachse parallel zu der Höhenachse Z'. Ein Verschwenkung des ersten plattenartigen Elements kann durch ein Vorsehen eines Gelenkelements oder eines elastisch deformierbaren Elements, mittels welcher das erste plattenartige Element an der Zentralstruktur befestigt ist, ermöglicht werden. Kumulativ oder alternativ kann das erste plattenartige Element zumindest abschnittsweise flexibel ausgestattet sein, so dass eine Verwindung oder Torsion des ersten plattenartigen Elements um die zweite Schwenkachse erfolgen kann. Durch die Verschwenkung und/oder die Verformung ist es möglich, dass bei einer Drehbewegung des Nutzers, das an dem Nutzer anliegende erste plattenartige Element, dieser Drehbewegung folgen kann. Der untere Rücken bleibt somit auch durch die Drehbewegung des Nutzers weiterhin abgestützt, wodurch Fehlhaltungen des Nutzers vermieden werden und der Sitzkomfort erhöht wird.

Nach einer weiteren bevorzugten Ausführungsform weist die Zentralstruktur zumindest ein sich entlang der Höhenachse Z' erstreckendes Stützelement auf. Bevorzugt ist dieses Stützelement unterseitig mit der Basisstruktur verbunden. Vorteilhafterweise weist die Zentralstruktur zwei sich entlang der Höhenachse Z' erstreckende Stützelemente auf, die unterseitig mit der Basisstruktur verbunden sind. Dabei ist es vorteilhaft, dass die Stützelemente entlang der Breitenachse Y' beabstandet sind. Hierdurch kann ein optimaler Krafteintrag in die Basisstruktur erfolgen und es wird eine optimale Stabilität der Zentralstruktur gewährleistet. Ferner kann bevorzugt ein mittlerer Abschnitt der Basisstruktur verstärkt ausgebildet sein, um eine für eine entsprechende Krafteinleitung ausreichende Stabilität zu gewährleisten.

Vorteilhafterweise weist das Rückenlehnenelement zwei Stabilitätselemente auf, welche in Form von Rippenelementen ausgebildet sind. Vorteilhafterweise sind die Rippenelemente entlang der Höheachse Z' über dem ersten plattenartigen Element angeordnet. Vorzugsweise weisen die Rippenelemente jeweils eine Erstreckung entlang der Breitenachse Y' auf. Bevorzugt erstreckt sich ein erstes Rippenelement in entgegengesetzter Richtung zu dem zweiten Rippenelement. Demnach würde das erste Rippenelement eine Erstreckung nach links entlang der Breitenrichtung Y'2 aufweisen und das zweite Rippenelement eine nach rechts entlang der Breitenrichtung Y'1 aufweisen. Diese Stabilitätselemente in der Form von Rippenelementen dienen vorteilhafterweise zur Abstützung des Schulterbereichs des Nutzers. Vorteilhafterweise sind die Rippenelemente P-förmig ausgebildet. Ferner ist es bevorzugt, wenn die Rippenelemente auch sich nach vorne, also entlang der Tiefenrichtung X'1, erstrecken. Hierdurch wird eine besserer Sitzkomfort erreicht.

Vorzugsweise sind die Rippenelemente an der Zentralstruktur angeordnet oder mit dieser integral ausgebildet. Vorteilhafterweise ist dabei je ein Rippenelement an einem Stützelement angeordnet oder je ein Rippenelement mit einem Stützelement integral ausgebildet. Unter integral ausgebildet, ist eine einteilige Ausgestaltung der Rippenelemente und der Stützelemente zu verstehen. Eine Anordnung eines Rippenelements an einem Stützelement kann beispielsweise durch eine Fixierung beispielsweise durch eine Schraubverbindung, eine Steckverbindung, eine Nietenverbindung oder eine Schweißverbindung erfolgen.

Nach einer weiteren vorteilhaften Ausführungsform sind die Rippenelemente schwenkbar an der Zentralstruktur angeordnet und/oder zumindest abschnittsweise flexibel ausgebildet. Vorteilhafterweise ist hierdurch eine Verschwenkung und/oder eine Verformung der Rippenelemente in radialer Richtung um eine dritte Schwenkachse ermöglicht. Die dritte Schwenkachse erstreckt sich bevorzugt im Wesentlichen entlang der Höhenachse Z'. Der verwendete Ausdruck "im Wesentlichen" soll dahingehend auszulegen sein, dass auch geringfügige Toleranzabweichungen mit beansprucht werden. So kann die Abweichung einen Winkel von bevorzugt kleiner 10°, weiter bevorzugt kleiner 7,5°, noch weiter bevorzugt kleiner 5° betragen. Vorzugsweise verläuft die dritte Schwenkachse parallel zu der Höhenachse Z'. Eine Verschwenkung der Rippenelemente kann durch ein Vorsehen eines Gelenkelements oder eines elastisch deformierbaren Elements, mittels welcher die Rippenelemente an der Zentralstruktur befestigt sind, ermöglicht werden. Kumulativ oder alternativ können die Rippenelemente zumindest abschnittsweise flexibel ausgestattet sein, so dass eine Verwindung oder Torsion der Rippenelemente um die dritte Schwenkachse erfolgen kann. Durch die Verschwenkung und/oder die Verformung ist es möglich, dass bei einer Drehbewegung des Nutzers, die an dem Nutzer anliegenden Rippenelemente, dieser Drehbewegung zumindest teilweise folgen können. Der Schulterbereich bleibt somit auch durch die Drehbewegung des Nutzers weiterhin abgestützt, wodurch Fehlhaltungen des Nutzers vermieden werden und der Sitzkomfort erhöht wird. Dabei ist es von Vorteil, dass die Verschwenkung und/oder Verformung der Rippenelemente unabhängig von einer Verschwenkung und/oder Verformung des ersten plattenartigen Elements ist.

Nach einer weiteren vorteilhaften Ausführungsform ist ein Kopfstützenteil an der Zentralstruktur angeordnet. Vorzugsweise ist das Kopfstützenteil entlang der Höhenachse Z' über den Rippenelementen angeordnet. Vorzugsweise ist das Kopfstützenteil mittels eines ersten Armelements an der Zentralstruktur angeordnet. Bevorzugt ist das erste Armelement zwischen den Stützelementen entlang der Höhenachse Z' angeordnet.

Nach einer weiteren bevorzugten Ausführungsform weist das Kopfstützenteil ein zweites plattenartiges Element auf. Ein solches zweites plattenartiges Element dient zur Abstützung des Kopfes. Dieses zweite plattenartige Element kann auch als ein Schalenelement ausgebildet sein.

Nach einer weiteren bevorzugten Ausführungsform ist das Kopfstützenteil entlang der Höhenachse Z' verlagerbar. Vorzugsweise ist an dem ersten Armelement eine Führungseinrichtung vorgesehen, in welcher ein zweites Armelement entlang der Höhenachse Z' geführt ist. Bevorzugt ist eine vorgegebene Höhenposition des zweiten Armelements durch eine Feststelleinrichtung festlegbar. Vorteilhafterweise ist an dem zweiten Armelement das zweite plattenartige Element angeordnet, an welchem bevorzugt ein Polsterelement angeordnet sein kann. Die Höheneinstellung des Kopfstützenteils kann demnach durch eine Verlagerung des zweiten plattenartiges Elements und dem zweiten Armelement relativ zu dem ersten Armelement, beziehungsweise der Zentralstruktur erfolgen. Dabei ist es von Vorteil, wenn das erste Armelement an der Zentralstruktur fest fixiert ist. Vorteilhafterweise ist das erste Armelement fest zwischen den Stützelementen fixiert.

Nach einer weiteren Ausführungsform könnte eine Verlagerung des Kopfstützenteil entlang der Höhenachse Z' auch durch eine Verlagerung des ersten Armelements entlang der Höhenachse Z' relativ zu der Zentralstruktur, beziehungsweise den Stützelementen realisiert werden. Dabei ist es vorteilhaft, wenn je ein Stützelement an der zum Armelement hinzeigenden Seite eine Schienenstruktur aufweist, in welcher das Armelement geführt werden kann.

Nach einer weiteren bevorzugten Ausführungsform umfasst der Fahrzeugsitz einen Verriegelungsmechanismus, mittels welchem die Verlagerung des Kopfstützenteils relativ zu der Zentralstruktur verriegelbar ist. Durch das Vorsehen eines Verriegelungsmechanismus kann eine gewünschte Höhe des Kopfstützenteils festgelegt werden. Ein solcher Verriegelungsmechanismus kann beispielsweise eine lösbare Verzahnung eines Riegels in einem Zahnelement umfassen.

Nach einer weiteren bevorzugten Ausführungsform umfasst der Fahrzeugsitz einen Rückstellmechanismus, mittels welchem die Verlagerung des Kopfstützenteils relativ zu der Zentralstruktur zu einer Ausgangsposition hin rückstellbar ist. Der Rückstellmechanismus kann beispielsweise ein elastisches Element oder ein Federelement umfassen.

Die Verlagerung des ersten Armelements kann kumulativ oder alternativ zu der Verlagerung des zweiten Armelements relativ zu dem zweiten Armelement erfolgen.

Nach einer weiteren bevorzugten Ausführungsform ist zumindest ein Führungsstift an dem zweiten Armelement vorgesehen ist. Bevorzugt ist der Führungsstift in der Führungseinrichtung geführt. Vorteilhafterweise ist die Führungseinrichtung U-förmig ausgebildet und weist an den beiden sich entlang der Tiefenrichtung X' erstreckenden U-Schenkeln eine Führungsnut oder eine Führungsschiene auf, in oder an welcher je ein Führungsstift geführt ist. Vorzugsweise weist die Feststelleinrichtung eine vorgegebene Anzahl an Vorsprüngen auf, welche komplementär zu einer an dem Führungsstift vorgesehen Ausnehmung oder Nut ausgebildet sind. Vorteilhafterweise presst in einer Feststellposition eine Federvorrichtung einen Vorsprung in die Ausnehmung des Führungsstifts. Hierdurch wird das zweite Armelement und somit auch das zweite plattenartige Element an einer bestimmte Höhenposition gehalten. Der Nutzer kann, um die Höhenposition eine entsprechende Kraft entlang der Höhenachse Z' aufwenden, wodurch die durch die Federvorrichtung aufgezwungene Pressverbindung zwischen der Ausnehmung des Führungsstifts und dem Vorsprung gelöst wird. Der Führungsstift kann dann zu einem weiteren Vorsprung, der unterhalb oder oberhalb des ursprünglichen Vorsprungs liegt, verlagert werden. Wiederum kann der jeweilige Vorsprung in der Ausnehmung des Führungsstifts aufgenommen werden, wobei durch die Federvorrichtung wiederum eine entsprechende Pressverbindung zwischen der Ausnehmung und dem nun ausgewählten Vorsprung vorliegt. Durch diese Ausgestaltung wird eine einfache Einstellung der Höhenposition des Kopfstützenteils erreicht.

Nach einer weiteren bevorzugten Ausführungsform umfasst die Führungseinrichtung eine Endaufnahme für den zumindest einen Führungsstift, in welcher eine Rotation des Führungsstifts und des zweiten Armelements um eine Schwenkachse S ermöglicht wird. Dabei ist es von Vorteil, wenn die Schwenkachse S sich entlang der Breitenachse Y' erstreckt. Ferner ist es von Vorteil, dass die Endaufnahme sich an einem oberen Ende der Führungsnut, beziehungsweise der Führungsschien befindet. Bevorzugt ist die durch die Schwenkung des zweiten Armelements das zweite plattartige Element entlang der Tiefenachse X' nach vorne verschwenkbar.

Der Fahrzeugsitz kann somit in eine Verstauposition gebracht werden, in welcher zum einen das Rückenlehnenelement im Wesentlichen parallel zum Sitzteil, beziehungsweise parallel zu der Tiefenachse X des Fahrzeugsitzes, verlagert worden ist. Ferner kann in dieser Position das Kopfstützenteil derart verschwenkt werden, dass dieses sich im Wesentlichen parallel zu der Tiefenachse X' erstreckt. Im Bezugssystem des gesamten Fahrzeugsitzes würde sich die Kopfstütze dann im Wesentlichen entlang der Höhenachse Z' erstrecken. Hierdurch kann der Fahrzeugsitz sehr platzsparend zusammengeklappt und gegebenenfalls verstaut werden.

Nach einer weiteren vorteilhaften Ausführungsform ist das zweite plattenartige Element mittels eines Gelenkelements an dem ersten oder zweiten Armelement angeordnet. Bevorzugt ist das zweite plattenartige Element um eine vierte Schwenkachse, welche im Wesentlichen entlang der Höhenachse Z' verläuft, schwenkbar. Vorzugsweise ist das plattenartige Element um eine fünfte Schwenkachse, welche im Wesentlichen entlang der Breitenachse Y' verläuft, schwenkbar. Durch diese Ausgestaltung kann eine optimale Abstützung des Kopfes erfolgen. Vorteilhafterweise sind die Verschwenkungen des Kopfstützenteils unabhängig von der Verschwenkung und/oder Verformung des ersten plattenartigen Elements und der Verschwenkung und/oder Verformung der Rippenelemente.

Nach einer weiteren bevorzugten Ausführungsform umfasst der Fahrzeugsitz einen Unterbau, mittels welchem dieser an der Karosserie des Fahrzeugs angeordnet ist. Der Unterbau ist vorzugsweise mit dem Sitzteil und gegebenenfalls mit dem Rückenlehenelement verbunden. Der Unterbau kann eine Dämpfungs- und/oder Federungseinrichtung zur Dämpfung und oder Federung von vertikalen Schwingungen oder Auslenkungen umfassen. Ferner kann der Unterbau eine Dämpfungs- und/oder Federungseinrichtung zur Dämpfung und oder Federung von horizontalen Schwingungen oder Auslenkungen umfassen.

Nach einer weiteren bevorzugten Ausführungsform ist das Rückenlehnenelement zumindest teilweise aus einer Aluminiumlegierung hergestellt. Durch die Verwendung dieses Materials kann eine ausreichende Stabilität und eine Gewichtsreduzierung realisiert werden.

Die Aufgabe wird auch von einer Nutzfahrzeugkabine gelöst mit einem Fahrzeugsitz nach einem der vorhergehenden Ausführungsformen. Der Fahrzeugsitz ist dabei mittels eines Führungssystems verlagerbar in der Nutzfahrzeugkabine angeordnet.

Die Nutzfahrzeugkabine kann dabei mit allen bereits obig im Rahmen des Fahrzeugsitzes beschriebenen Merkmalen einzeln oder in Kombination miteinander ausgestattet sein und umgekehrt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine isometrische Ansicht des Fahrzeugsitzes nach einer Ausführungsform;
- Fig. 2: eine Rückansicht des Rückenlehnenelementes nach einer Ausführungsform;
- Fig. 3: eine Rückansicht des Rückenlehnenelementes nach einer Ausführungsform;
- Fig. 4: eine Seitenansicht des Fahrzeugsitzes nach einer Ausführungsform;
- Fig. 5: eine Draufsicht von oben des Rückenlehnenelementes nach einer Ausführungsform;
- Fig. 6: eine Draufsicht von unten des Rückenlehnenelementes nach einer Ausführungsform;
- Fig. 7: eine Rückansicht des Kopfstützenteils nach einer Ausführungsform;
- Fig. 7a: eine Schnittansicht eines Abschnitts des Kopfstützenteils nach einer Ausführungsform;
- Fig. 8: eine Schnittansicht eines Abschnitts des Kopfstützenteils nach einer Ausführungsform;
- Fig. 9: eine Seitenansicht eines Abschnitts des Kopfstützenteils nach einer Ausführungsform;
- Fig. 10: eine Seitenansicht eines Abschnitts des Kopfstützenteils nach einer Ausführungsform;
- Fig. 11: eine Seitenansicht eines Abschnitts des Kopfstützenteils nach einer Ausführungsform;
- Fig. 12: eine Explosionsdarstellung des Kopfstützenteils und eines Abschnitts des Rückenlehnenelementes nach einer Ausführungsform;
- Fig. 13: eine isometrische Ansicht des Fahrzeugsitzes nach einer Ausführungsform;
- Fig. 14: eine Explosionsdarstellung des Fahrzeugsitzes nach einer Ausführungsform;
- Fig. 15: eine Feststelleinrichtung zur Einstellung der Neigung des Rückenlehnenelementes nach einer Ausführungsform;
- Fig. 16: eine Feststelleinrichtung zur Einstellung der Neigung des Rückenlehnenelementes nach einer Ausführungsform;
- Fig. 17: eine Feststelleinrichtung zur Einstellung der Neigung des Rückenlehnenelementes nach einer Ausführungsform;
- Fig. 18: eine Seitenansicht des Fahrzeugsitzes nach einer Ausführungsform mit verschiedenen Neigungsposition der Rückenlehne;
- Fig. 19: Ansicht einer Nutzfahrzeugkabine mit einem Fahrzeugsitz nach einer Ausführungsform;
- Fig. 20: Ansicht einer Nutzfahrzeugkabine mit einem Fahrzeugsitz nach einer Ausführungsform;
- Fig. 21: Ansicht eines Fahrzeugsitzes nach einer Ausführungsform;
- Fig. 22: Ansicht eines Führungssystems für einen Fahrzeugsitz nach einer Ausführungsform;
- Fig. 23: Ansicht eines Führungssystems für einen Fahrzeugsitz nach einer Ausführungsform;
- Fig. 24: Ansicht einer Nutzfahrzeugkabine mit einem Fahrzeugsitz nach einer Ausführungsform;
- Fig. 25: Ansicht einer Nutzfahrzeugkabine mit einem Fahrzeugsitz nach einer Ausführungsform;
- Fig. 26: Ansicht einer Nutzfahrzeugkabine mit einem Fahrzeugsitz nach einer Ausführungsform;
- Fig. 27a,b: Ansichten eines Führungssystems für einen Fahrzeugsitz nach einer Ausführungsform;
- Fig. 28: Ansicht eines Fahrzeugsitzes nach einer Ausführungsform von oben;
- Fig. 29: Ansicht eines Fahrzeugsitzes nach einer Ausführungsform von unten.

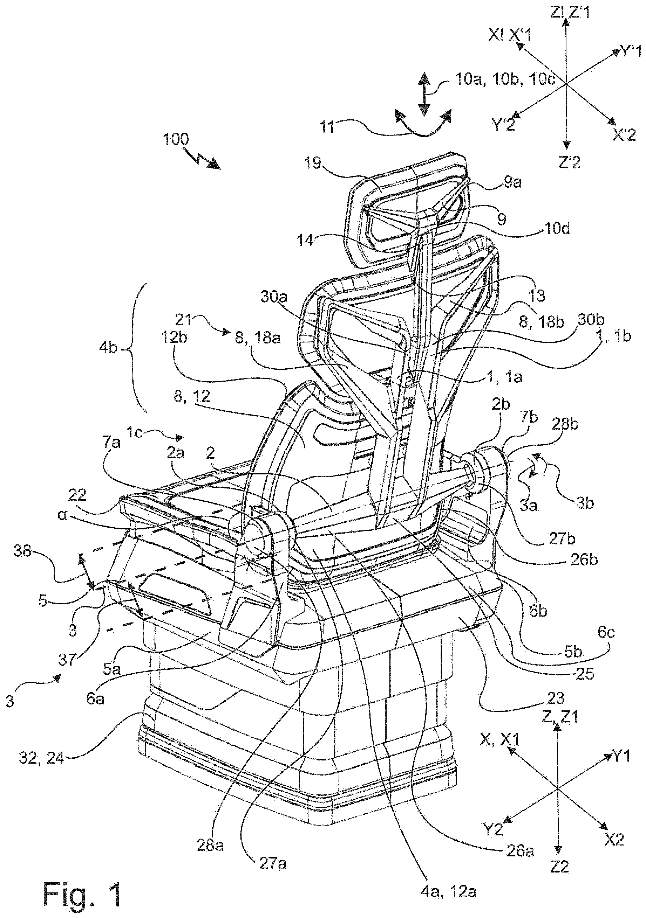

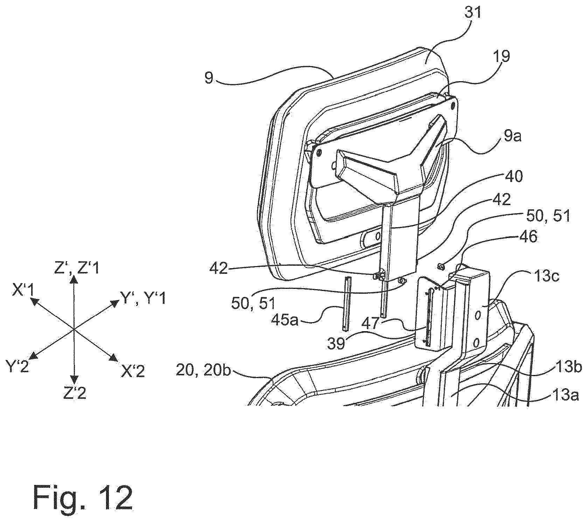

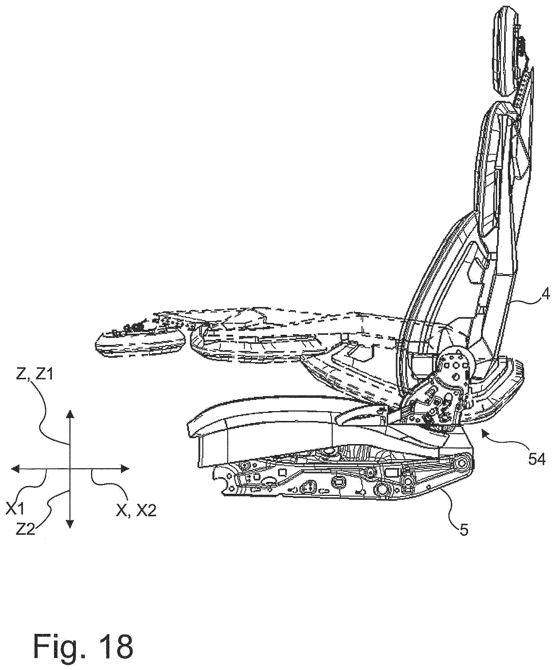

In den Figuren 1 bis 29 ist ein Fahrzeugsitz 100, beziehungsweise ein Rückenlehnenelement 4 dargestellt. Der Fahrzeugsitz 100 mit einer Erstreckung entlang einer Höhenachse Z und einer Breitenachse Y, umfasst ein Sitzteil 5 und ein Rückenlehnenelement 4, welches sich entlang einer Höhenachse Z' und in einer Breitenachse Y' erstreckt, wobei das Rückenlehnenelement 4 eine sich entlang der Höhenachse Z' erstreckende Zentralstruktur 1, 1a, 1b aufweist, welche entlang der Breitenachse Y' mittig angeordnet ist und in einer sich im Wesentlichen entlang der Breitenachse Y' erstreckenden Basisstruktur 2 mündet, wobei das Rückenlehnenelement 4 zumindest ein Stabilitätselement 8 aufweist, welches sich entlang der Breitenachse Y' von der Zentralstruktur 1, 1a, 1b wegerstreckt, wobei die Basisstruktur 2 in einer Haltestruktur 6 des Fahrzeugsites 100 schwenkbar angeordnet ist, so dass das Rückenlehnenelement 4 um eine erste Schwenkachse 3 schwenkbar ist, wobei die erste Schwenkachse 3 entlang einer Höhenachse Z des Fahrzeugsitzes von dem Sitzteil 5 beabstandet ist.

Der Fahrzeugsitz 100 erstreckt sich somit entlang einer Höhenachse Z einer Breitenachse Y und einer Tiefenachse X. Den jeweiligen Achsen sind jeweils zwei Richtungen zuzuordnen. So umfasst die Höhenachse Z die Richtungen Z1 (nach oben) und Z2 (nach unten). Die Breitenachse Y umfasst die Richtungen Y1 (nach rechts) und Y2 (nach links). Die Tiefenachse X umfasst die Richtungen X1 (nach vorne) und X2 (nach hinten).

Das Rückenlehnenelement 4 erstreckt sich entlang einer Höhenachse Z', einer Breitenachse Y' und einer Tiefenachse X'. Diesen jeweiligen Achsen sind ebenso zwei Richtungen zuzuordnen. So umfasst die Höhenachse Z' die Richtungen Z'1 (nach oben) und Z'2 (nach unten). Die Breitenachse Y' umfasst die Richtungen Y'1 (nach rechts) und Y'2 (nach links). Die Tiefenachse X' umfasst die Richtungen X'1 (nach vorne) und X'2 (nach hinten).

Eine erfindungsgemäße Schwenkung des Rückenlehnenelementes um die erste Schwenkachse 3 kann somit nach vorne und nach hinten beziehungsweise entlang den Richtungen X1 und X2 des Fahrzeugsitzes 100 erfolgen. In den Figuren ist diese Schwenkrichtungen mit den Pfeilen 3a und 3b gekennzeichnet.

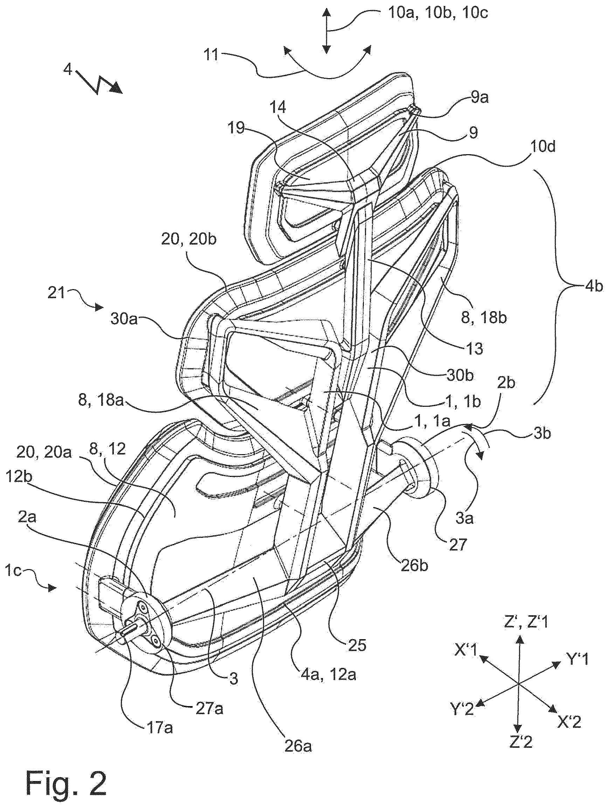

Auf dem Rückenlehnenelement 4 können Polsterelemente 20, 20a, 20b angeordnet werden. Das Rückenlehnenelement 4 und die Polsterelemente 20, 20a, 20b bilden somit die Rückenlehne 21. Auch das Sitzteil 5 kann ein Polsterelement 22 umfassen. Schließlich kann das Kopfstützenteil 9 ebenso ein Polsterelement 31 umfassen. Die Ausgestaltung mit den Polsterelementen ist beispielsweise in den Figuren 1 und 2 gut zu erkennen.

Die Haltestruktur 6 weist zwei sich entlang der Höhenachse Z erstreckende Halteschenkel 6a, 6b auf. Diese Halteschenkel 6a, 6b sind am Sitzteil 5 an jeweils einem entlang der Breitenachse Y äußeren Rand 5a, 5b des Sitzteils 5 angeordnet. Die Haltestruktur 6 weist eine sich entlang der Breitenachse Y erstreckende Querverstrebung 6c auf, welche die Halteschenkel 6a, 6b entlang der horizontalen Breitenachse Y verbindet. Diese Querverstrebung 6c kann einteilig, beziehungsweise einstückig, mit den Halteschenkel 6a, 6b ausgebildet sein. Die Halteschenkel 6a, 6b können auch mittels einer Schraubverbindung, einer Nietenverbindung, einer Schweißverbindung oder einer sonstigen Verbindungsart mit der Querverstrebung 6c verbunden sein. Die Haltestruktur 6 ist somit U-förmig ausgebildet.

Das Sitzteil 5 weist ein Aufnahmeelement 23 für das Polsterelement 22 oder die Sitzfläche auf. Dieses Aufnahmeelement 23 kann derart gefertigt sein, dass es eine entsprechende Stabilität aufweist, welche ausreichend für einen entsprechenden Kräfteeintrag durch die Halteschenkel 6a, 6b ist. Die Querverstrebung 6c könnte somit ein Abschnitt des Aufnahmeelements 23 sein, welcher sich entlang der Breitenrichtung Y erstreckt. Alternativ könnte die Querverstrebung 6c ein einzelnes Bauteil sein, welches in oder an dem Aufnahmeelement 23 angeordnet ist. Diese Querverstrebung 6c könnte auch zusätzlich mit dem Unterbau 32 des Fahrzeugsitzes 100 verbunden sein, um einen entsprechenden Krafteintrag an diesen weiterzuleiten.

Das Rückenlehnenelement 4 umfasst einen unteren Teil 4a, welcher entlang der Höhenachse Z' unter der ersten Schwenkachse 3 angeordnet ist und einen oberen Teil 4b, welcher entlang der Höhenachse Z' über der ersten Schwenkachse 3 angeordnet ist. Bei einer Verschwenkung entsprechend der Schwenkrichtung 3a wird der oberen Teil 4b nach hinten verschwenkt. Gleichzeitig wird der untere Teil 4a nach vorne verschwenkt. Hierdurch kann eine Lordose-/ Kyphose-Unterstützung herbeigeführt werden.

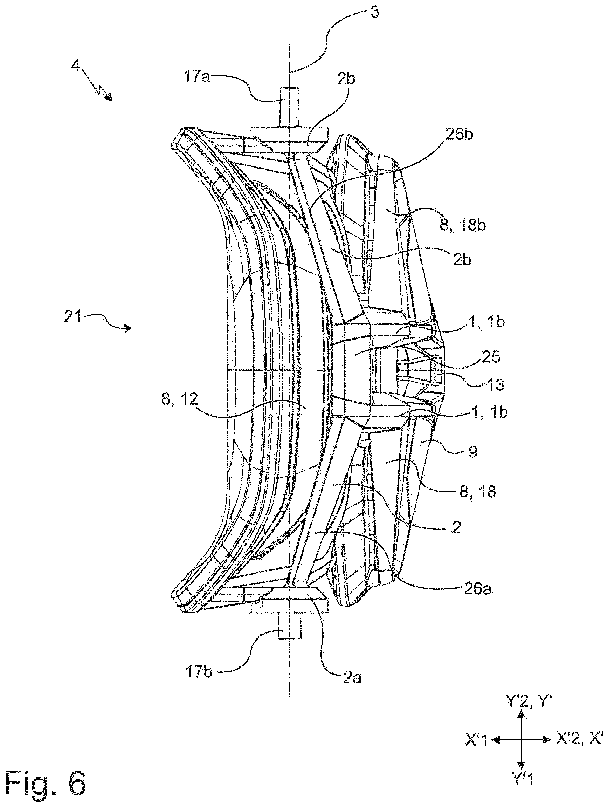

Die Basisstruktur 2 ist formstabil ausgebildet und erstreckt sich entlang der Breitenachse Y'. Wie aus Figur 6 ersichtlich, kann die Basisstruktur eine bogenartige Struktur aufweisen, welche sich nach hinten, also in der Tiefenrichtung X'2 erstreckt. Die Basisstruktur 2 weist einen mittleren Abschnitt 25 auf. Dieser mittlere Abschnitt 25 ist parallel zu der ersten Schwenkachse 3 und entlang Tiefenrichtung X'2 von der Schwenkachse beabstandet. Der mittlere Abschnitt 25 der Basisstruktur 2 kann verstärkt ausgebildet sein, um eine für eine entsprechende Krafteinleitung ausreichende Stabilität zu gewährleisten. Von dem mittleren Abschnitt 25 erstreckt sich je ein seitlicher Abschnitt 26a, 26 linear zu der Schwenkachse 3 hin. Diese seitlichen Abschnitte 26a und 26b münden am jeweils äußeren Rand 2a, 2b der Basisstruktur in einen vorzugsweise kreisförmig ausgebildeten Aufnahmeabschnitt 27a, 27b. An den Aufnahmeabschnitten 27a, 27b ist jeweils ein Lagerwellenelement 17a, 17b angeordnet. Die Schwenkachse 3 verläuft mittig durch die Lagerwellenelemente 17a, 17b.

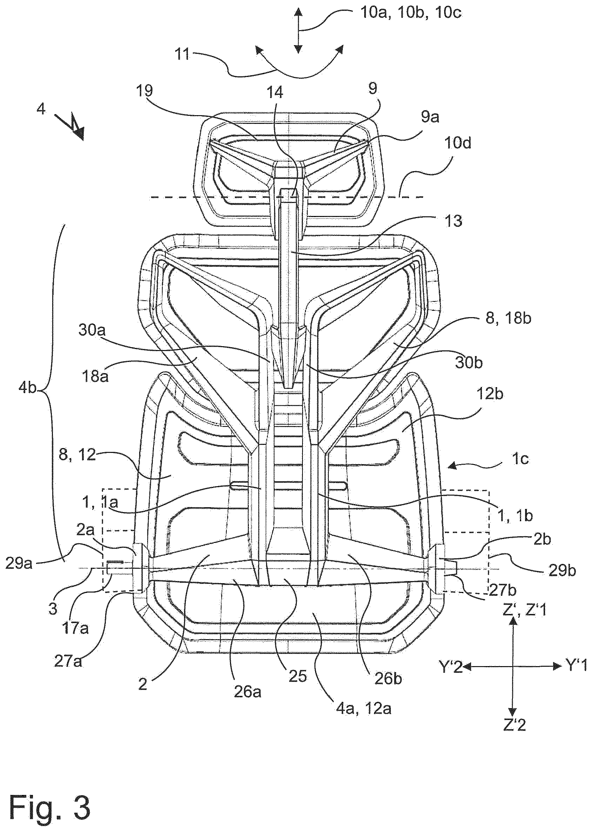

Die Lagerwellenelemente 17a, 17b sind in einer Schwenklagerung 7a, 7b der Halteschenkel 6a, 6b drehbar gelagert. Es wäre von Vorteil, wenn die Lagerwellenelemente 17a, 17b durch die Halteschenkel 6a, 6b entlang der Breitenachse Y hindurch reichen und in einem Sicherungselement 28a, 28b münden. Ein solches Sicherungselement 28a, 28b könnte beispielsweise in einer Armlehne 29a, 29b integriert sein, wie beispielsweise in Figur 3 angedeutet. Bei einer solchen Ausführungsform könnten die Lagerwellenelemente 17a, 17b auch als Drehlagerung für die Armlehnen 29a, 29b dienen.

Der Fahrzeugsitz 100 kann auch einen Verriegelungsmechanismus umfassen, mittels welchem die Schwenkung des Rückenlehnenelementes 4 um die erste Schwenkachse 3 verriegelbar ist. Ferner kann der Fahrzeugsitz 100 einen Rückstellmechanismus umfassen, mittels welchem eine Schwenkung des Rückenlehnenelementes 4 um die erste Schwenkachse 3 zu einer Ausgangsposition hin rückstellbar ist.

Das Rückenlehnenelement 4 umfasst ein Stabilitätselement 8 in Form eines ersten plattenartigen Elementes 12. Das erste plattenartige Element 12 erstreckt sich entlang der Breitenrichtung Y' und der Höhenrichtung Z'. Es kann eine Schalenform aufweisen, in welcher der untere Rücken des Nutzers aufgenommen werden kann. Hierzu würden sich die äußeren Ränder des plattenartigen Elements in Tiefenrichtung X'1 nach vorne erstrecken.

Das erste plattenartige Element 12 ist entlang der Höhenachse Z' in einem unteren Bereich 1c der Zentralstruktur 1 angeordnet. Das erste plattenartige Element 12 erstreckt sich entlang der Höhenachse Z' des Rückenlehnenelementes 4 über die Schwenkachse 3 hinaus in Richtung des Sitzteils 5. Der untere Teil 4a des Rückenlehnenelementes 4 entspricht somit dem über die Schwenkachse 3 hinausragenden unteren Abschnitt 12a des ersten plattenartigen Elements 12. Bei einer Verschwenkung entlang der Schenkrichtung 3a würde demnach der obere Abschnitt 12b des ersten plattenartigen Elements 12 nach hinten schwenken und der untere Abschnitt 12a nach vorne schwenken. Hierdurch wird wie bereits erwähnt eine Lordose-/Kyphose-Unterstützung herbeigeführt.

Das erste plattenartige Element 12 kann schwenkbar an der Zentralstruktur angeordnet sein und/oder zumindest abschnittsweise flexibel ausgebildet sein. Somit kann eine Verschwenkung und/oder eine Verformung des ersten plattenartigen Elementes 12 in radialer Richtung entlang der Pfeilrichtung 11 um eine zweite Schwenkachse 10a ermöglicht werden. Die zweite Schwenkachse 10a erstreckt sich im Wesentlichen entlang der Höhenachse Z'. Eine Drehbewegung des Nutzers kann somit in gewissem Umfang durch eine Verschwenkung oder Verwindung des ersten plattenartigen Elements gefolgt werden. Da der untere Rücken somit weiter abgestützt wird, wird ein erhöhter Sitzkomfort ermöglicht.

Auf dem ersten plattenartigen Element 12 ist weiterhin ein Polsterelement 20a angeordnet. Das erste plattenartige Element 12, beziehungsweise das Polsterelement. können vorzugsweise dabei derart ausgebildet sein, dass der untere Abschnitt 12a, beziehungsweise der sich darauf angeordnete unteren Abschnitt des Polsterelements 20a das Sitzteil 5, beziehungsweis das Polsterelement 22, kontaktieren. Es könnte jedoch auch vorgesehen sein, dass ein geringer Freiraum zwischen Polsterelement 22 und dem untere Abschnitt 12a, beziehungsweise dem sich darauf angeordneten untere Abschnitt des Polsterelements 20a vorgesehen ist. Ein solcher Abstand liegt vorzugsweise in einem Bereich zwischen 0 cm und 7,5 cm, weiter bevorzugt in einem Bereich zwischen 0 cm und 5 cm, weiter bevorzugt in einem Bereich zwischen 0 cm und 2,5 cm.

Die Zentralstruktur 1, 1a, 1b weist zumindest ein sich entlang der Höhenachse Z' erstreckendes Stützelement 1a, 1 auf, das unterseitig mit der Basisstruktur 2 verbunden ist. Den Figuren 1 bis 3 ist zu entnehmen, dass die Zentralstruktur 1, 1a, 1b zwei sich entlang der Höhenachse Z' erstreckende Stützelemente 1a, 1b aufweist, die unterseitig mit der Basisstruktur 2 verbunden sind. Die Stützelemente 1a, 1b sind dabei entlang der Breitenachse Y' beabstandet. Ferner münden die Stützelemente 1a, 1b in dem mittleren Abschnitt 25 der Basisstruktur 2. Die Breite des mittleren Abschnitts 25 wird durch die beabstandeten Stützelemente 1a, 1b vorgegeben.

Das Rückenlehnenelement 4 weist zwei Stabilitätselemente 8 auf, welche in Form von Rippenelementen 18a, 18b ausgebildet sind. Die Rippenelemente 18a, 18b sind entlang der Höhenachse Z' über dem ersten plattenartigen Element 12 angeordnet und weisen jeweils eine Erstreckung entlang der Breitenachse Y' auf. Ein erstes Rippenelement 18a erstreckt sich entlang der Breitenrichtung Y'2 und somit entgegengesetzt zu dem zweiten Rippenelement 18b, welches sich entlang der Breitenrichtung Y'1 erstreckt. Die Rippenelemente 18a, 18b sind dabei P-förmig ausgebildet und erstrecken sich ebenso leicht nach vorne, also in Richtung X'1. Diese Rippenelemente 18a, 18b dienen zur Abstützung des Schulterbereichs des Nutzers. Ferner können die Rippenelemente 18a, 18b an der Zentralstruktur 1, 1a, 1b angeordnet sein, der mit dieser integral ausgebildet ist. Demnach ist je ein Rippenelement 18a, 18b an einem Stützelement 1a, 1b angeordnet oder je ein Rippenelement 18a, 18b mit einem Stützelement 1a, 1b integral ausgebildet. Denkbare Verbindungen zwischen den Rippenelementen 18a, 18b und den Stützelementen 1a, 1b sind Schraubverbindungen, Schweißverbindungen, Nietenverbindungen usw. Ebenso kann, wie erwähnt, ein Rippenelement 18a, 18b mit einem Stützelement 1a, 1b integral ausgebildet sein, demnach könnten die beiden Elemente durch ein Gießverfahren oder ähnliches Verfahren hergestellt werden.

Auf den Rippenelementen 18a, 18b ist weiterhin ein Polsterelement 20b angeordnet.

Darüber hinaus ist ein Kopfstützenteil 9 an der Zentralstruktur 1 angeordnet. Das Kopfstützenteil 9 ist entlang der Höhenachse Z' über den Rippenelementen 18a, 18b mittels eines ersten Armelements 13 angeordnet. Das erste Armelement 13 ist dabei zwischen den Stützelementen 1a, 1b entlang der Höhenachse Z' angeordnet. Dies kann eine feste Anordnung sein. Alternativ kann diese Anordnung derart vorgesehen sein, dass das Kopfstützenteil 9 entlang des Pfeils 15, also entlang der Höhenachse Z' verlagert werden kann. Dazu ist das Kopfstützenteil 9 mittels eines ersten Armelements 13, beziehungsweise eines Arms an der Zentralstruktur 1, angeordnet. Das Armelement 13 ist dabei zwischen den Stützelementen 1a, 1b entlang der Höhenachse Z' verlagerbar angeordnet. An den zum ersten Armelement 13 hinweisenden Seitenflächen 30a, 30b der Stützelemente 1a, 1b könnte dazu eine Schienenvorrichtung vorgesehen sein, mittels welcher das erste Armelement 13 geführt werden kann. Denkbar wäre auch, dass ein Verriegelungsmechanismus vorgesehen ist, mittels welchem eine bestimmte Höhe der Kopfstütze festgelegt werden kann. Auch wäre denkbar, dass ein Rückstellmechanismus vorgesehen ist, mittels welchem eine Rückstellung zu einer Ausgangshöhe vorgenommen wird.

Nach einer weiteren Ausführungsform ist an dem ersten Armelement 13 eine Führungseinrichtung 39 vorgesehen, in welcher ein zweites Armelement 40 entlang der Höhenachse Z' geführt ist. Eine vorgegebene Höhenposition des zweiten Armelements 40 ist durch eine Feststelleinrichtung 41 festlegbar. Die Verlagerung des ersten Armelements 13 kann kumulativ oder alternativ zu der Verlagerung des zweiten Armelements 40 relativ zu dem zweiten Armelement erfolgen. Es wäre auch möglich, dass das erste Armelement 13 fest an der Zentralstruktur fixiert ist.

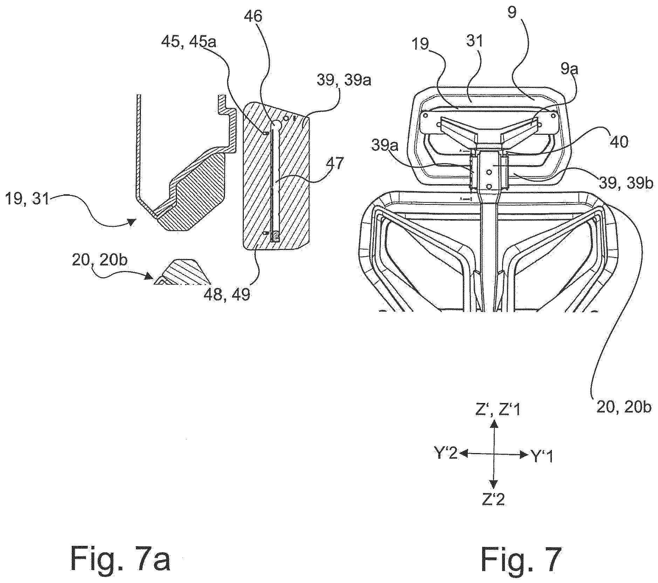

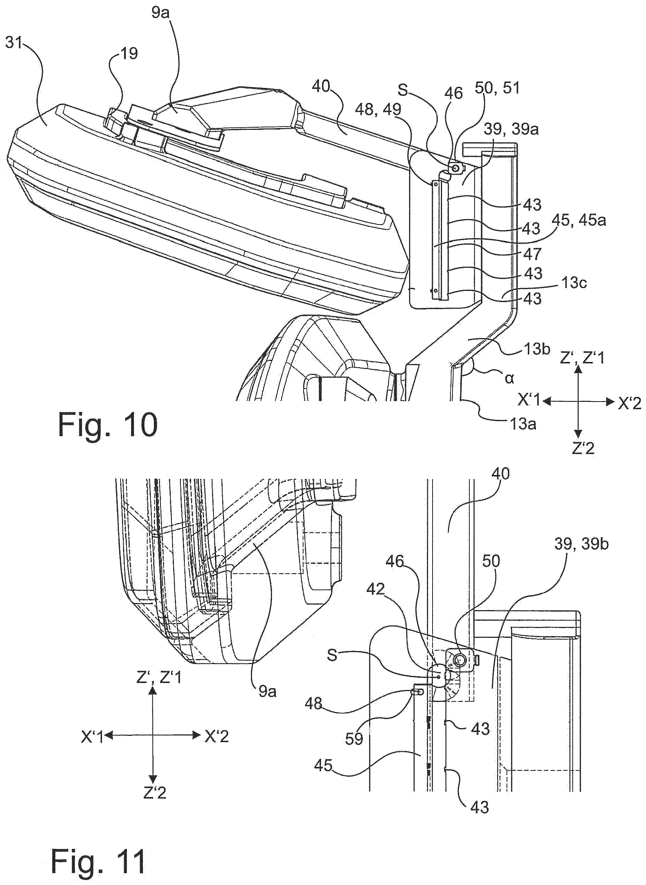

An dem zweiten Armelement 40 sind vorzugsweise zwei Führungsstifte 42 vorgesehen. Die Führungseinrichtung 39 ist U-förmig ausgebildet und weist an den beiden sich entlang der Tiefenrichtung X' erstreckenden U-Schenkeln 39a, 39b eine Führungsnut 47 oder eine Führungsschiene auf, in oder an welcher je ein Führungsstift 42 geführt ist. Diese Ausführungsform ist in den Figuren 7 bis 12 dargestellt. Die U-förmig ausgebildete Führungseinrichtung 39 ist an einem oberen Abschnitt 13c des ersten Armelements 13 angeordnet. Dieser obere Abschnitt 13c des ersten Armelements 13 ist entlang der Tiefenachse X' nach hinten (Tiefenrichtung X'2) versetzt zu einem unteren Abschnitt 13a des ersten Armelements 13 angeordnet. Durch diese Versetzung nimmt das zweite Armelement 40 im Wesentlichen die gleiche Position entlang der Tiefenachse X' wie der untere Abschnitt 13a des ersten Armelements 13 ein. Der untere Abschnitt 13a des ersten Armelements 13 ist über einen Übergangsabschnitt 13b mit dem oberen Abschnitt 13c verbunden. Dieser Übergangsabschnitt 13b und der untere Abschnitt 13a schließen einen Winkel α ein. Dies ist gut ersichtlich in Figur 10. Der Winkel α liegt bevorzugt in einem Bereich zwischen 10° und 80°, weiter bevorzugt zwischen 25° und 65°, weiter bevorzugt zwischen 35° und 55°, weiter bevorzugt zwischen 40°und 50°, weiter bevorzugt bei 45°.

Ferner weist die Feststelleinrichtung 39 eine vorgegebene Anzahl an Vorsprüngen 43 auf. Die Vorsprünge 43 sind in der Führungsnut 47 nach innen angeordnet. Ferner sind die Vorsprünge 43 komplementär zu einer Ausnehmung 44 der Führungsstifte 42 ausgebildet. Die Feststelleinrichtung 41 umfasst weiterhin eine Federvorrichtung 45, welche eine Schiene 45a aufweist, welche mittels zumindest einem vorzugsweise mehreren Federelemente 45b in Richtung der Vorsprünge gedrückt wird. Die Schiene 45a erstreckt sich im Wesentlichen über die ganze Länge der Führungsnut 47. Die Schiene 45a ist weiterhin über zwei Stifte 48, welche jeweils in einer Führung 49 geführt sind, an dem U-Schenkel angeordnet. Durch die Länge der Führung ist der maximale Verlagerungsweg der Schiene 45a in Richtung der Vorsprünge 43 vorgegeben.

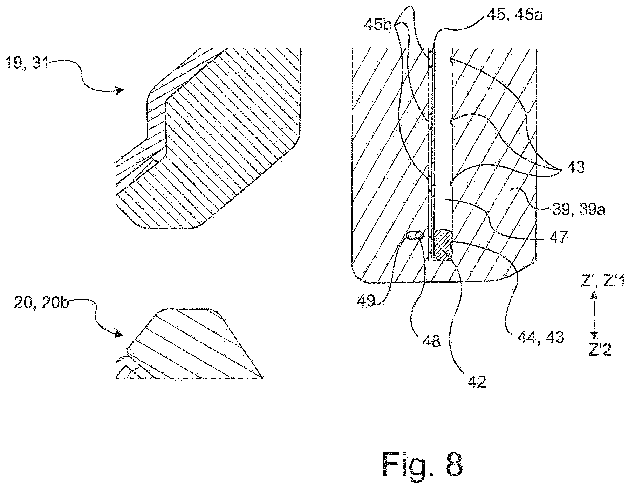

In den Figuren 7, 7a und 8 ist der Führungsstift 42 in der untersten Position der Führungsnut 47. Dies entspricht der untersten Position des Kopfstützenteils 9. Der Führungsstift 42 befindet sich in einer Feststellposition in welcher Federvorrichtung 45 einen Vorsprung 43 in die Ausnehmung 44 des Führungsstifts 42 presst. Hierdurch wird das zweite Armelement 40 und somit auch das zweite plattenartige Element 19 an dieser bestimmte Höhenposition gehalten.

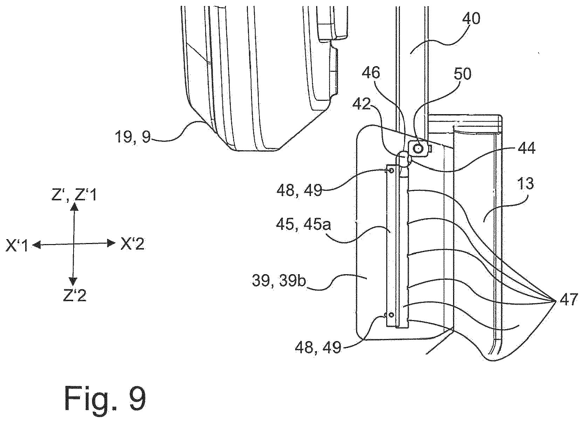

Der Nutzer kann, um die Höhenposition eine entsprechend Kraft entlang der Höhenachse Z' aufwenden, wodurch die durch die Federvorrichtung 45 aufgezwungene Pressverbindung zwischen der Ausnehmung 44 des Führungsstifts 42 und dem Vorsprung 43 gelöst wird. Der Führungsstift 42 kann dann zu einem weiteren Vorsprung 43, der unterhalb oder oberhalb des ursprünglichen Vorsprungs 43 liegt, verlagert werden. Wiederum kann der jeweilige Vorsprung 43 in der Ausnehmung 44 des Führungsstiftes 42 aufgenommen werden, wobei durch die Federvorrichtung 45 wiederum eine entsprechende Pressverbindung zwischen der Ausnehmung 44 und dem nun ausgewählten Vorsprung 43 vorliegt. Durch diese Ausgestaltung wird eine einfache Einstellung der Höhenposition des Kopfstützenteils 9 erreicht. In der Figur 7, 7a ist beispielsweise eine unterste Position des Kopfstützenteils erkennbar. In Figur 9, 10 und 11 ist eine oberste Position des Kopfstützenteils erkennbar.

Die Führungseinrichtung 39 weist eine Endaufnahme 46 für den einen Führungsstift 42 auf, in welcher eine Rotation des Führungsstifts 42 und des zweiten Armelements 40 um eine Schwenkachse S ermöglicht wird. Die Endaufnahme ist entlang der Höhenachse Z' am oberen Ende der Führungsnut 47 angeordnet und ist im Wesentlichen kreisförmig ausgebildet. In den In den Figuren 9 und 10 ist zu entnehmen, dass der Führungsstift 42 sich in der Endaufnahme 46 der Führungsnut 47 befindet. Gleichzeitig ist das Kopfstützenteil 9 maximal nach oben ausgezogen. Demnach erstreckt sich die Schwenkachse S entlang der Breitenachse Y'. Somit wird eine Schwenkung des zweiten Armelements 40 und des zweiten plattartigen Elements entlang der Tiefenachse X' nach vorne (in Richtung X'1) ermöglicht. Diese ist gut in Figur 10 erkennbar. An der Führungsvorrichtung ist weiterhin eine Verriegelungseinrichtung 50, welche ein blattartiges Elements 51 umfasst. Durch eine Vorspannung, erzeugt beispielsweise mittels eines Federelements, drückt dieses blattartiges Elements 51 in die Ausnahme 44 des Führungsstiftes 42, wodurch dieses in der noch vorne geschwenkten Position verriegelt ist. Durch eine Kraftaufwendung eines Nutzers kann das blattartige Element 51 gegen die Federkraft verlagert werden und der Führungsstift 42 kann wieder in die Führungsnut 47 verlagert werden.

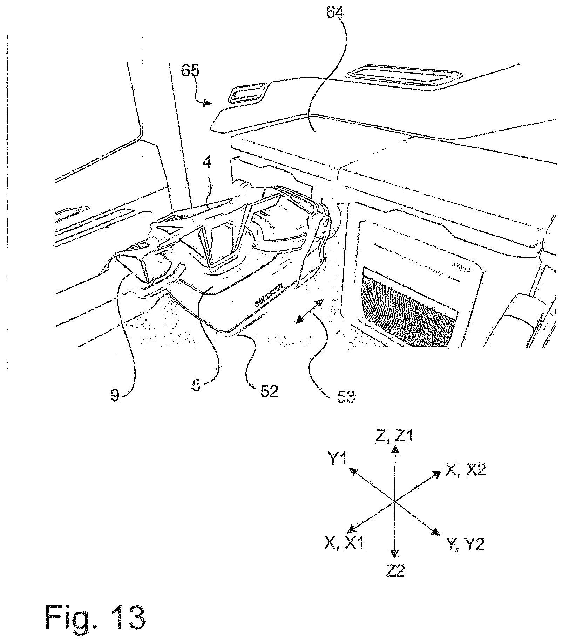

Der Fahrzeugsitz 100 kann somit in eine Verstauposition gebracht werden, in welcher zum einen das Rückenlehnenelement 4 im Wesentlichen parallel zum Sitzteil 5, beziehungsweise parallel zu der Tiefenachse X des Fahrzeugsitzes 100, verlagert worden ist. Dies ist beispielsweise in den Figuren 13, 19, 20, 25 und 26 erkennbar. Ferner kann in dieser Position das Kopfstützenteil 9 derart verschwenkt werden, dass dieses sich im Wesentlichen parallel zu der Tiefenachse X' erstreckt. Im Bezugssystem des gesamten Fahrzeugsitzes 100 würde sich das Kopfstützenteil 9 dann im Wesentlichen entlang der Höhenachse Z' erstrecken. Hierdurch kann der Fahrzeugsitz 100 sehr platzsparend zusammengeklappt und gegebenenfalls verstaut werden. Dies ist beispielsweise in den Figur 13, 19, 20, 25 und 26 dargestellt. Der Fahrzeugsitz 100 kann dann beispielsweise mittels eines Führungssytems 52 unter eine Ablage oder ein Bett 64 verlagert werden (entlang Pfeil 53) und dort verstaut werden. Der vorteilhaft eingeklappte Fahrzeugsitz nimmt dort äußerst wenig Stauraum ein.

Das Kopfstützenteil 9 weist ein zweites plattenartiges Element 19 auf, an welchem ein Polsterelement 31 angeordnet ist. Das zweite plattenartige Element 19 ist mittels eines Gelenkelements 14 an dem ersten 13 oder zweiten Armelement 40 angeordnet. Durch dieses Gelenkelement 14 ist eine Verschwenkung des Kopfstützenteils 9 um eine vierte Schwenkachse 10c, welche im Wesentlichen entlang der Höhenachse Z' verläuft, und eine Verschwenkung um eine fünfte Schwenkachse 10d, welche im Wesentlichen entlang der Breitenachse Y' verläuft, ermöglicht. Eine Verschwenkung um die vierte Schwenkachse 10c wird durch den Doppelpfeil 16b dargestellt und eine Verschwenkung um die fünfte Schwenkachse 10d wird durch den Doppelpfeil 16a dargestellt.

Das Gelenk 14 verbindet dabei das erste 13 oder das zweite Armelement 40 mit einer Rippenstruktur 9a, welche V-förmig ausgestaltet ist und an welcher das zweite plattenartige Element 19 angeordnet ist.

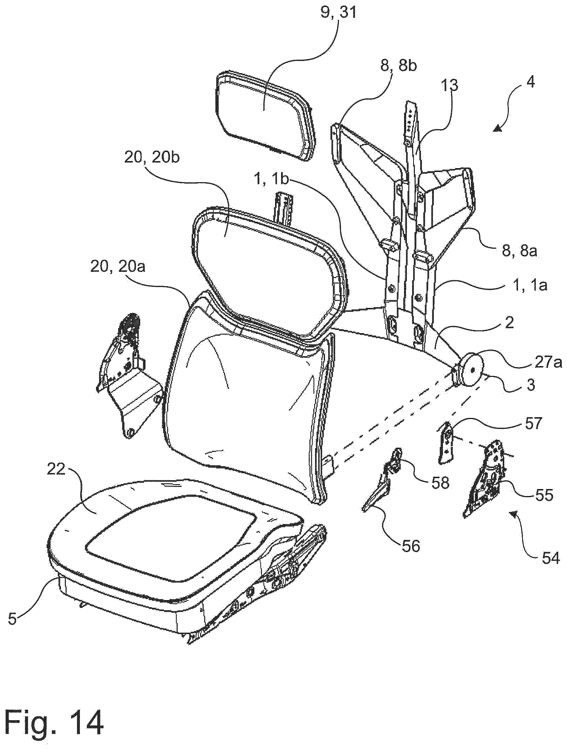

In den Figuren 14 bis 18 sind Ausführungsformen dargestellt, in welchen eine Feststelleinrichtung 54 zur Einstellung der Neigung des Rückenlehnenelements 4 relativ zu dem Sitzteil 5 erfolgen kann. Dieser Feststellmechanismus 54 kann in die Haltestruktur 6, beziehungsweise die Halteschenkel 6a, 6b integriert sein. Die Feststelleinrichtung 54 umfasst ein Grundelement 55, welches an der Haltestruktur 6, beziehungsweise die Halteschenkel 6a, 6b angeordnet, beziehungsweise befestigt wird. An diesem Grundelement 55 ist ein Betätigungselement 56 rotierbar befestigt. Ferner ist ein Zahnelement 57 an dem Grundelement 55 rotierbar angeordnet. Dieses Zahnelement 57 ist mit der Zentralstruktur 1 fest verbunden. Insbesondere ist das Zahnelement 57 mit der Basisstruktur 2 verbunden. Das Zahnelement 57 ist dabei mit einem Aufnahmeabschnitt 27a, 27b mechanisch fest verbunden. Dies kann beispielsweise durch eine Verschweißung erfolgen.

An einem unteren Ende weist das Zahnelement 57 einen Zahnabschnitt 57a in Form eines Kreissegments auf. Ferner ist an dem Grundelement 55 ein Riegelelement 58 angeordnet. Dieses Riegelelement 58 weist ebenso einen Zahnabschnitt 58a auf, welcher in den Zahnabschnitt 57a des Zahnelements 57 eingreifen kann. In einer Verriegelungsposition greift der Zahnabschnitt 58a in den Zahnabschnitt 57a ein, wodurch das Zahnelement 57 festgelegt ist. Eine Rotation des Zahnelements 57 um eine Rotationsachse 60 ist somit unterbunden, wodurch auch die Neigung des Rückenlehnenelementes 4 relativ zu dem Sitzteil 5 festgelegt ist.

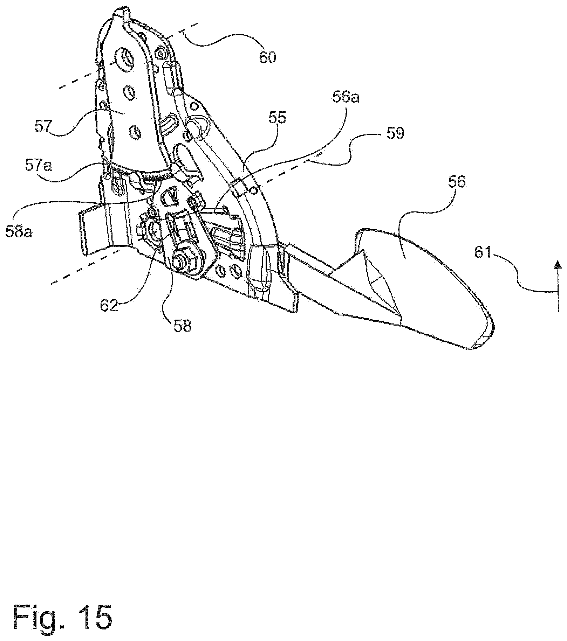

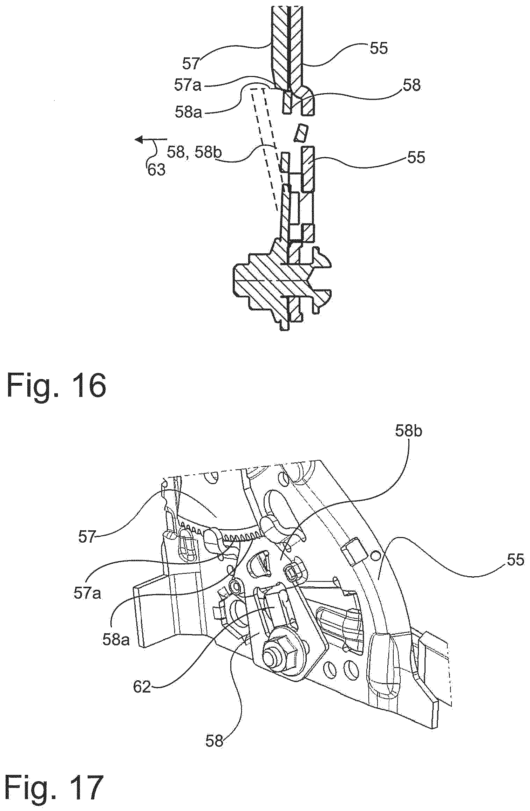

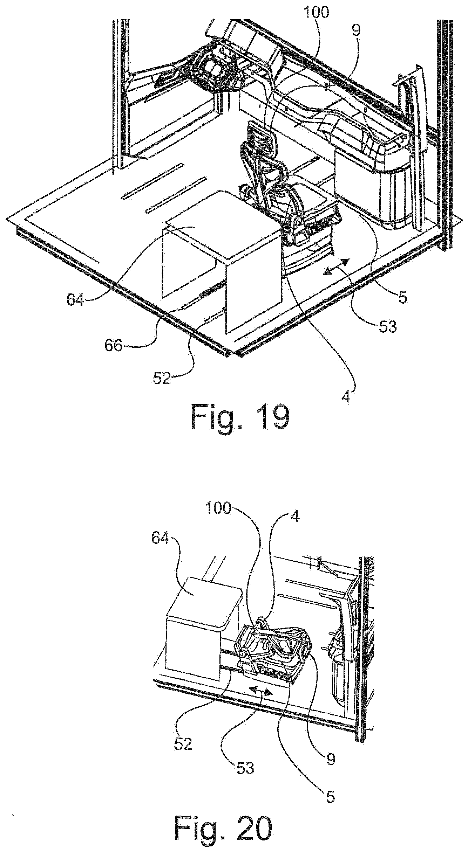

Eine Betätigung des Betätigungselements 56 entlang der Pfeilrichtung 61 (Figur 15) verursacht eine Rotation des Betätigungselements 56 um die Achse 59. Ein hinterer Abschnitt 56a des Betätigungselements 56 wird demnach entgegen der Pfeilrichtung 61 bewegt. Hierdurch wird ein Vorsprung 62 gegen das Riegelelement 58 gedrückt, so dass ein oberer Abschnitt 58b des Riegelelements 58 nach außen, beziehungsweise entlang der Pfeilrichtung 63 (Figur 16) gebogen wird. In Figur 19 ist das Riegelelements 58 in diesem deformierten Zustand mit Strichlinien angedeutet. Durch dies Deformation des Riegelelements 58 greift der Zahnabschnitt 58a nicht mehr in den Zahnabschnitt 57a des Zahnelements 57 ein. Das Zahnelement 57 kann dann mit dem Rückenelement rotiert werden, wodurch die Neigung des Rückenlehenelements 4 relativ zum Sitzteil einstellbar ist. Nach dem die gewünschte Neigung eingestellt worden ist, wird das Betätigungselement entgegen der Pfeilrichtung 61 verlagert. Dies kann auch automatisch durch eine Federkraftbeaufschlagung erfolgen. Das Riegelelement 58 kann reversibel wieder in seine Ursprungsposition zurückkehren, wodurch der Zahnabschnitt 58a wieder in den Zahnabschnitt 57a des Zahnelements 57, gegebenenfalls an einem unterschiedlichen Bereich des Zahnabschnitt 57a eingreift.

Soll der Fahrzeugsitz in einen verstaubaren Zustand versetzt werden, kann nach der Entriegelung die Rückenlehne nach vorne in Richtung X1 geschwenkt werden, bis das Rückenlehnenelement 4 im Wesentlichen parallel zum Sitzteil angeordnet ist. Dies ist beispielsweise in den Figur 19 bis 21 und 24 bis 26 dargestellt.

Durch die voneinander unabhängig schwenkbar, beziehungsweise verformbaren Stabilitätselemente 8, in Form des ersten plattenartigen Elements 12 und der Rippenelemente 18a, 18b und des davon unabhängig schwenkbaren Kopfstützenteils, kann bei einer Drehbewegung in drei Ebenen eine Schwenkung, Verformung erfolgen, wodurch eine optimale Abstützung des Nutzer erfolgen kann. Hierdurch können Fehlhaltungen vermieden werden und ein hoher Sitzkomfort gewährleistet werden.

Hinzu kommt, dass durch die Schwenkung um die erste Schwenkachse 3 eine Lordose-/Kyphose-Unterstützung erfolgt. Der Abstand 37 zwischen der ersten Schwenkachse 3 kann demnach derart gewählt werden, dass eine solche Lordose-/Kyphose-Unterstützung erzeugt werden kann. Vorteilhafterweise liegt der erste Abstand zwischen der Schwenkachse und dem Sitzteil in einem Bereich zwischen 2 cm und 30 cm, weiter bevorzugt liegt der erste Abstand in einem Bereich zwischen 5 cm und 25 cm. Noch weiter bevorzugt liegt der erste Abstand in einem Bereich zwischen 5 cm und 15 cm.

Denkbar wäre es auch, wenn die Schwenklagerung 7a, 7b der Halteschenkel 6a, 6b entlang der Höhenachse Z verstellbar wäre. Hiermit wäre der Abstand 37 zwischen der ersten Schwenkachse 3 und dem Sitzteil 5 einstellbar, wodurch die Lordose-/Kyphose-Unterstützung somit an den Nutzer angepasst werden könnte. Dies könnte beispielsweise mit einer Rastvorrichtung erfolgen, wobei die Lagerwellenelemente 17a, 17b in Rastvorrichtungen gehalten werden, welche in unterschiedlichen Höhen angeordnet sind.

Da durch das Polsterelement 20a, welches an dem ersten plattenartigen Element 12 angeordnet ist, ein gewisser Abstand 38 zu der ersten Schwenkachse 3 durch die Rückenlehne 21 eingenommen wird, kann bei herkömmlichen Sitzen die Rückenlehne nicht derart weit nach vorne verschwenkt werden, dass die Rückenlehen und das Sitzteil im Wesentlichen parallel sind. Durch den erfindungsgemäßen Abstand 37 zwischen der Schwenkachse 3 und dem Sitzteil, beziehungsweise der Sitzteiloberfläche, welche mit dem Nutzer in Kontakt tritt, kann die Rückenlehne 21, beziehungsweise das Rückenlehnenelement 4 derart weit nach vorn geschwenkt werden, dass die Zentralstruktur, beziehungsweise das Rückenlehnenelement im Wesentlichen parallel sind. Hierdurch kann der Sitz einen wesentlich kleineren Stauraum einnehmen. Der Abstand 37 müsste demnach zumindest dem Abstand 38 entsprechen.

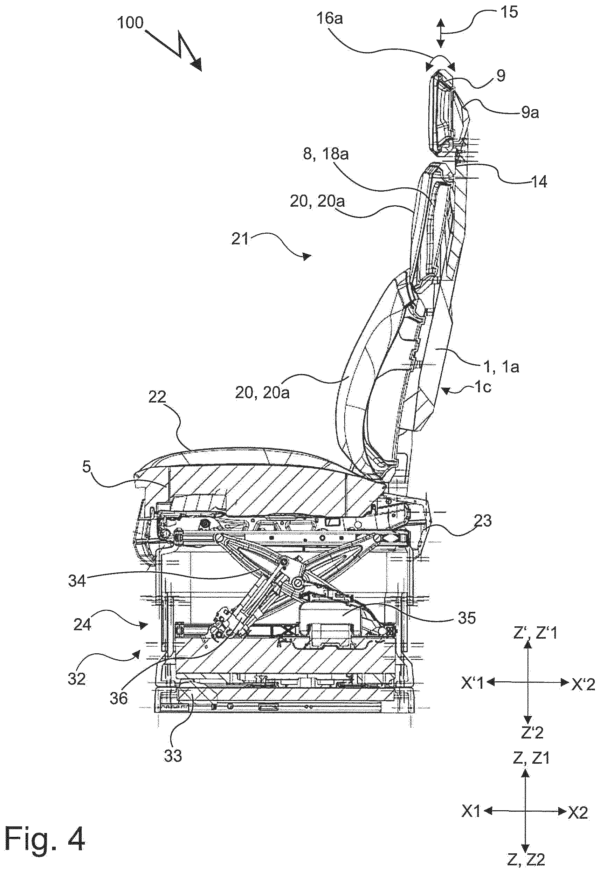

In Figur 4 ist der Sitzunterbau 32 dargestellt, welcher das Sitzteil 5 mit der Fahrzeugkarosserie 33 verbindet. Dieser Sitzunterbau 32 umfasst ein Scherengestell 34 mit einer Federungsvorrichtung 35, beispielsweise eine Luftfeder und einer Dämpfervorrichtung 36. Weiterhin kann auch noch eine Horizontalfederung vorgesehen sein. Der Sitzunterbau 32 kann auch eine Abdeckungseinrichtung 24 umfassen, welche die genannten Komponenten abdeckt

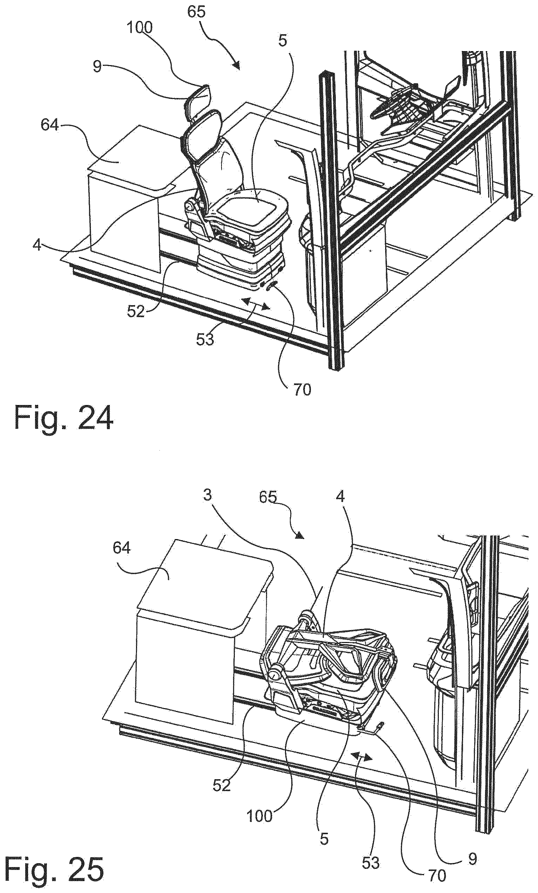

In den Figuren 19 bis 27 ist der Fahrzeugsitz 100 als vorteilhafter Beifahrersitz ausgestaltet, der in einer Nutzfahrzeugkabine 65 angeordnet ist. Eine solche Fahrzeugkabine kann beispielsweise bei einem LKW vorgesehen sein. In den Figuren 19 und 24 ist jeweils ein aufgeklappter Zustand des Fahrzeugsitzes dargestellt, in welchem der Fahrzeugsitz 100 in einem vorderen Bereich des Nutzfahrzeugs angeordnet ist. In den Figuren 20, 21, 25 und 26 ist der Fahrzeugsitz 100 in einem eingeklappten Zustand. Dabei ist das Rückenlehnenelement 4 im Wesentlichen parallel zum Sitzteil 5. Dies ist ermöglicht durch die erfindungsgemäße Beabstandung der ersten Schwenkachse 3 entlang einer Höhenachse Z des Fahrzeugsitzes 100 von dem Sitzteil 5 beabstandet ist.

Durch die bereits beschriebene vorteilhafte Ausgestaltung des Kopfstützenteils 9, in welcher das Armelement 13 in einer Führungseinrichtung 39 verlagerbar ist, ist das Kopfstützenteil 9 in vorteilhafterweise entlang der Höhenrichtung Z2 nach unten klappbar. Das Kopfstützenteil 9 würde nach dem Zusammenklappen des Fahrzeugsitzes 100 über das Sitzteil 5 hinausragen und aufgrund des beschränkten Innenraums als störend angesehen. Durch das vorteilhafte Umklappen des Kopfstützenteils 9 wird die Sitzlänge in dem zusammengeklappten Zustand erheblich verringert.

In vielen Nutzfahrzeugkabinen 65 ist ein Bett oder eine Ablage 64 hinter den Fahrzeugsitzen 100 vorgesehen. Der vorteilhafte zusammenklappbare Fahrzeugsitz 100 kann nach den Ausführungsformen gemäß den Figuren 13 und 19 bis 27 unter dem Bett, beziehungsweise der Ablage 64 verstaut werden. Hierzu ist ein Führungssystem 52, beziehungsweise ein Schienensystem vorgesehen. Mittels dieses Führungssystems 52 ist der Fahrzeugsitz 100 an dem Karosserieboden, beziehungsweise dem Boden der Nutzfahrzeugkabine verbunden. Dabei ist/sind zumindest ein, vorzugsweise zwei untere(s) Schienenelement(e) 66 vorgesehen, welche/s in dem Karosserieboden, beziehungsweise Kabinenboden eingelassen oder auf diesem befestigt ist. Auf diesem unteren Schienenelement 66 ist/sind zumindest ein, vorzugsweise zwei obere(s) Schienenelement(e) 67 vorgesehen, welche/s mit dem Fahrzeugsitz 100 verbunden ist/sind. Vorteilhafterweise verlaufen die beiden unteren Schienenelemente 66 parallel.

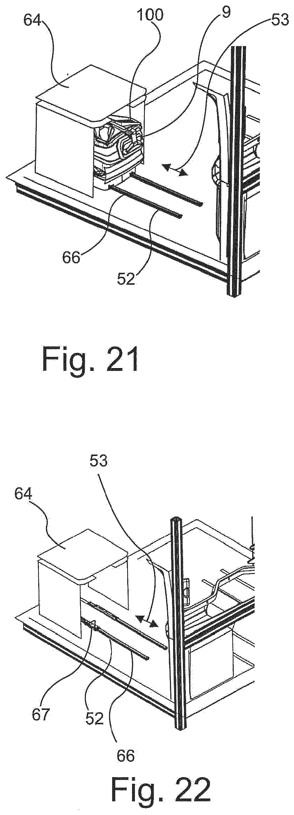

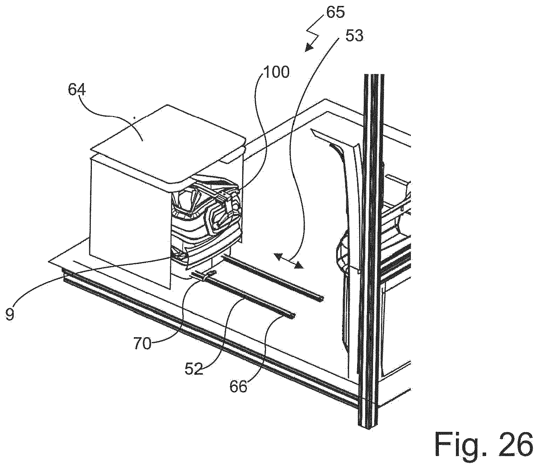

An dem oberen Schienenelementen 67 ist weiterhin eine Arretierungseinrichtung 68 vorgesehen, mittels welcher der Fahrzeugsitz 100 an einer entsprechenden Position arretierbar ist. Zur Bedienung der Arretierungseinrichtung 68 kann ein Bowdenzug 69 vorgesehen sein. Dies ist in den Figuren 19 bis 23 dargestellt. Alternativ kann ein Hebelelement 70 vorgesehen sein (Figuren 24 bis 27). In den Figuren 19 und 24 ist eine maximale vordere Position der oberen Schienenelemente 67 dargestellt, in welcher der Fahrzeugsitz in einer entsprechenden maximalen vorderen Position sich befinden würde. In den Figuren 21 und 26 ist eine maximale hintere Position der oberen Schienenelemente 67 dargestellt, in welcher der Fahrzeugsitz in einer entsprechenden maximalen hinteren Position sich befinden würde. Hierbei würde sich diese zusammengeklappt unter dem Bett, beziehungsweise unter der Ablage 64 sich befinden.

Der Fahrzeugsitz ist dabei lediglich während der Betätigung der Arretierungseinrichtung 68 verlagerbar. Sobald die Betätigung los gelassen wird, greift die Arretierungseinrichtung 68 und arretiert den Fahrzeugsitz 100 an der entsprechenden Position. Die Verlagerung kann durch Muskelkraft des Nutzers erfolgen. Es könnte jedoch auch ein Stellantrieb vorgesehen sein, welcher den Fahrzeugsitz zu der gewünschten Position hin verlagert. Ein solcher Stellantrieb kann beispielsweise elektrisch oder hydraulisch angetrieben werden.

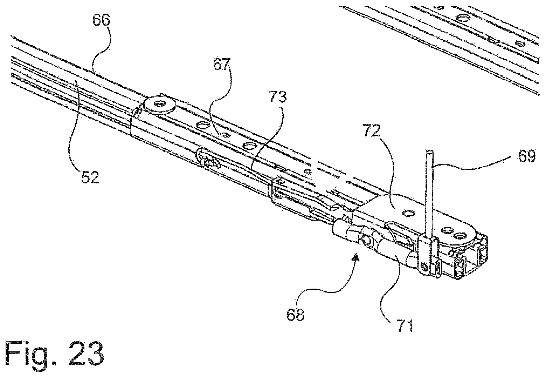

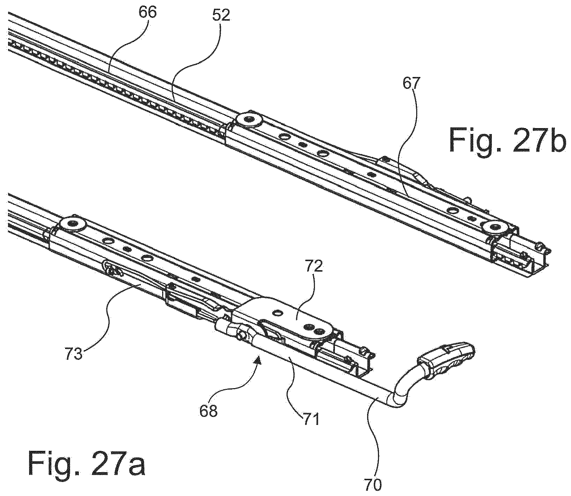

In den Figuren 23 und 27a (Vorderseite), 27b (Rückseite) ist die Arretierungseinrichtung 68 gezeigt. Dies umfasst ein Hebelelement 71, welches um eine Rotationsachse drehbar ist. Das Hebelelement ist an dem oberen Schienenelement 67 mittels eines Befestigungselements 72 befestigt. An dem Hebelelement 71 sind Rastelemente vorgesehen, welche in eine Zahnleiste eingreifen, welche an dem unteren Schienenelement 68 vorgesehen ist. Durch den Eingriff besteht eine feste Verrastung zwischen dem oberen 67 und dem unteren Schienenelement 66. Ferner ist ein Rückstellelement 73 in Form eines Federelements vorgesehen, mittels welchem die Rotation des Hebelelements rückstellbar ist. Durch dieses Rückstellelement 73 wird nach der Betätigung der Arretierungseinrichtung 68 diese wieder in den eingerasteten Zustand überführt.

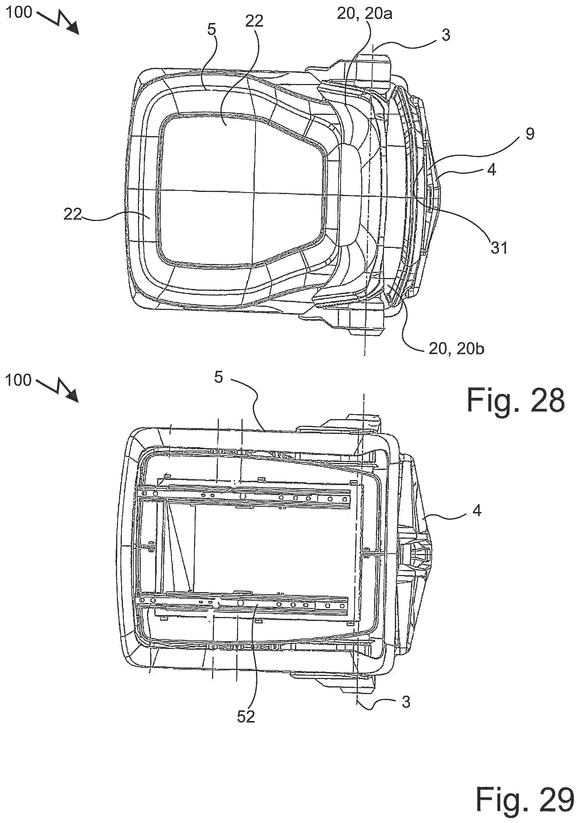

In Figur 29 ist die Unterseite des Fahrzeugsitzes100 wiedergegeben. Hier sind die oberen Schienenelemente 67 des Führungssystems 52 erkennbar.

Durch ein Einklappen des Fahrzeugsitzes 100 wird ermöglicht, dass im vorderen Bereich der Nutzfahrzeugkabine entweder auf Beifahrerseite oder auf Fahrerseite oder in beiden Bereichen ein größerer Bereich frei wird, um hier beispielsweise einen Tisch oder andere erwünschte zusätzliche Baumodule oder Bauelemente anzuordnen, die dann eine anderweitige zeitbefristete Nutzung der Nutzfahrzeugkabine ermöglichen. Ebenso kann dann in diesem Bereich beispielsweise ein weiterer Schlafplatz angeordnet werden.

Der erfindungsgemäße Fahrzeugsitz 100 mit der neuartigen Rückenlehnenstruktur 4 zeichnet sich dadurch aus, dass Verstrebungen/Verstrebungselemente oder seitliche Stabilitätselemente 4, die durchaus auch schwenkbar angeordnet sein können, links und rechts von einer von oben nach unten verlaufenden mittig angesetzten zentralen, kräfteaufnehmenden Längsstruktur 1 sich wegerstrecken. Diese zentral angeordnete rückseitige Längsstruktur 1 ist unterseitig auf einer vorzugsweise horizontal oder in Anlehnung an die Horizontale ausgerichtete Schwenkachse 3 abgestützt und damit fest verbunden. Auf diese Weise sind diese rückseitige Zentralstruktur/Längsstruktur 1 und die Schwenkachse 3 dazu geeignet, nach vorne und nach hinten die Rückenlehne 21 zu verschwenken, wobei entscheidend ist, dass diese Schwenkachse 3 gegenüber dem Sitzteil 5 erhöht in einem U-förmigen Profil 6, welches sich von dem Sitzteil 5 in seiner Rückseite nach oben erstreckt, angeordnet ist. Dies hat zur Folge, dass, wenn diese besagte Schwenkachse 3 links und rechtsseitig in nach-oben-stehendem U-Schenkeln 6a, 6b fixiert ist, eine Schwenkbewegung, beispielsweise im Bereich der Lendenwirbel oder sogar darüber bzw. darunter, durchgeführt werden kann. Diese dadurch bewirkte Kippbewegung der Rückenlehne 21 lässt den unterhalb der Schwenkachse 3 liegenden Rückenlehnenteil 4a bei einer Verschwenkung nach vorne schwenken und hierdurch eine Lordose-/Kyphose-Unterstützung herbeiführen.

In Fig. 1 wird ein Fahrzeugsitz 100 in perspektivischer rückseitiger Ansicht dargestellt. Dieser Darstellung ist zu entnehmen, dass es sich um eine vollständig neuartige Rückenstruktur bei dem Fahrzeugsitz 100 handelt. Diese Rückenstruktur 4 setzt sich aus einer zentralen Stützlängsstruktur 1a, 1b und von oben nach unten aus einzelnen Bauteilen 8 oder einem einzigen Bauteil 8 zusammen.

Bei den Strukturelementen 1a und 1b, die sich von oben nach unten erstrecken und hier als vorzugsweise vertikal verlaufende Stützelemente ausgebildet sind, handelt es sich um kräfteaufnehmende Stützelemente 1a, 1b, die unterseitig mit einer Schwenkachse 3 verbunden sind. Auf diese Weise wird bei einem Verschwenken um die Schwenkachse 3 gemäß den Pfeilen 3a, 3b die gesamte sich oberhalb der Schwenkachse 3 erstreckende Rückenstruktur 4b nach vorne oder nach hinten verschwenkt. Dies trifft in entgegengesetzter Richtung für den unteren Teil 4a, der sich zum Sitzteil 5 hin erstreckt, zu. Ein oberer Teil 4b und ein Kopfteil 9 dieser Rückenlehne 21 sind demzufolge gegenüber dem unteren Teil 4a entgegengesetzt bezüglich des Schwenkpunktes 3 verschwenkbar.

Diese Schwenkbewegung wird dadurch erreicht, dass die Schwenkachse 3 erhöht angeordnet ist, also höher als das Sitzteil 5. Dies wird erreicht, indem ein U-förmiger Aufnahmerahmen 6a, 6b, 6c im rückseitigen Bereich des Sitzteils 5 angeordnet ist, um mittels der U-Schenkel 6a und 6b eine Anordnung der Schwenkachse 3 in einem höheren Zustand zu erreichen.

Die Rückenlehnenstruktur 4 weist zudem seitliche Elemente 18a und 18b sowie ein Kopfteil 9 auf, die sich um eine vertikal verlaufende Schwenkachse/Kraftachse 10a, 10b, 10c entlang der Pfeilrichtung 11 auch verschwenken lassen könnten, jedoch nicht müssen. Dies geht aus Fig. 2, die die Rücklehne 21 perspektivisch zeigt, hervor. Hierdurch wird eine hohe Flexibilität der Rückenlehne 21 erreicht.

Diese Flexibilität wird auch dadurch erreicht, dass das plattenartige Element 12 nicht unflexibel ausgebildet ist. Vielmehr hat dieses plattenartige Element 12 die Funktion, dass es gegenüber der Schwenkachse 3 und gegebenenfalls der Stützlängsstruktur 1a, 1b flexibel zu Abstützungszwecken des Rückens angeordnet ist und sich auch in seitlicher Richtung nach hinten und nach vorne verwinden kann. Dadurch wird der separate Teil gemäß den Abschnitten 18a und 18b im oberen Schulterbereich unabhängig von dem darunter liegenden Bereich gemäß dem plattenartigen Element 12 bewegbar oder gerade eben nicht bewegbar.

An einem zentralen nach oben entlang der Kraftachse 10 a, 10b, 10c sich erstreckenden Arm 13 ist das Kopfstützenteil 9 angeordnet, welches selbstverständlich auch nach vorne oder nach hinten in einem hier nicht näher dargestellten Gelenk 14 zum Nach-Vorne-, oder Nach-Hinten-Neigen eines Kopfes verschwenkbar angeordnet sein kann. Ebenso kann dieses Kopfteil 9 auch seitlich nach links und rechts um eine Vertikalachse verschwenkbar angeordnet sein.

In den Figuren 2, 3 und 4 ist dies nochmals näher dargestellt. Hier ist auch deutlich zu sehen, dass die Schwenkachse 3 um die Schwenkrichtung 3a, 3b geschwenkt werden kann, sodass sich die gesamte Rückenlehnenstruktur 4 einschließlich der innovativ ausgebildeten, sich schräg nach oben erstreckenden und auch leicht nach vorne erstreckenden seitlichen Rippenelemente 18a, 18b, verschwenken lässt. Diese Rippenelemente 18a, 18b sind in ähnlicher Form in dem Kopfteil 9 als Rippenstruktur 9a ebenso ausgebildet.

Auch in Figur 4 wird die Kopfstütze dargestellt, welche sich zum Einen, nach oben und nach unten, entlang des Pfeils 15 verschieben lassen könnte, zum Anderen sich auch nach vorne und nach hinten verschwenken lassen könnte, wie es durch den Doppelpfeil 16a dargestellt ist.

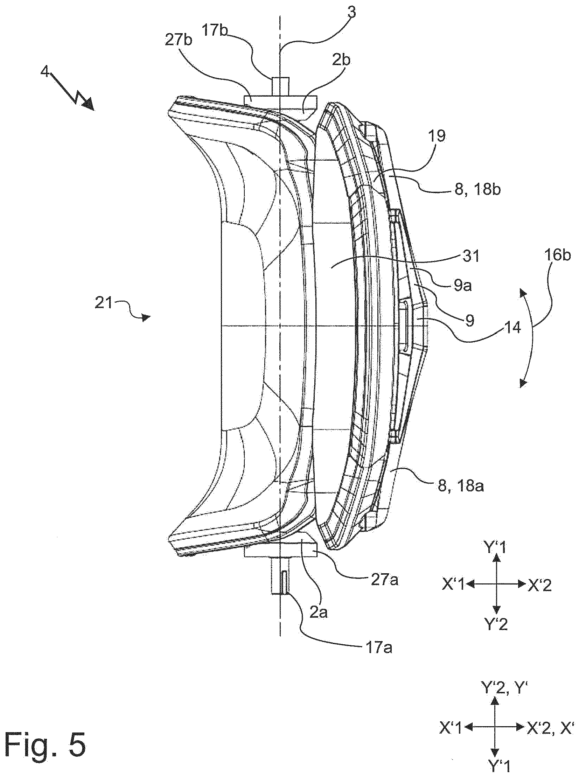

Ebenso kann sich das Kopfteil gemäß dem Doppelpfeil 16b nach links und rechts verschwenken, sofern dies gewünscht ist. Dies wird in Figur 5 gezeigt, die eine Draufsicht ausschnittsweise von dem Sitz wiedergibt.

In einer Darstellung gemäß Fig. 2 und 3 wird die Schwenkachse 3 mit ihrer Schwenkhalterung gegenüber dem hier nicht gezeigten U-förmigen, von unten nach oben sich erstreckenden Lagerungsteil, gezeigt. In diesem Bereich 27a, 27b ist eine Schwenk- bzw. Drehlagerung angeordnet. Vorzugsweise weist sowohl die Schwenkachse 3 als auch die erfindungsgemäße restliche Rückenstruktur aus Stabilitätsgründen und aus Gewichtsgründen eine Aluminiumlegierung auf.

In Figur 1 ist der Sitz mit der erfindungsgemäßen Rückenstruktur 4 und der innovativen U-förmigen Lagerung mittels zwei sich nach oben erstreckenden U-förmigen Armen 6a, 6b dargestellt.

Der Fahrersitz 100 ist als Beifahrerfahrzeugsitz entwickelt worden, der ebenso als Fahrersitz ausgebildet sein kann, welcher platzsparend im hinteren Bereich der Nutzfahrzeugkabine 65 im abgeklappten Zustand verstaut werden kann, um so einen erhöhten Platzbedarf im vorderen Bereich der Nutzfahrzeugkabine 65, beispielsweise für den Aufbau eines Tisches zum Einnehmen eines Essens zur Verfügung zu stellen.

Ein derartiger Beifahrer- oder Fahrersitz 100 lässt sich derart verändern, dass der gesamte Rückenlehnenbereich 4 bis auf das Sitzteil 5 herunterzuklappen ist, sodass eine Rückseite des Rückenlehnenbereiches 4 nahezu horizontal angeordnet ist. Anschließend lässt sich dieser Fahrzeugsitz 100 im eingeklappten Zustand nach hinten verschieben, indem er auf am Karosserieboden eingelassenen Schienen oder aufgesetzten Schienen 52 nach hinten verschoben wird.

Hierzu weist der Sitz 100 an seiner Unterseite komplementär ausgebildete Schienenelemente 66, 67 oder Rollenelemente oder Gleitsteine oder dergleichen auf, um eine Verschiebung in Vorwärts- und Rückwärtsrichtung des Fahrzeugsitzes 100 zu ermöglichen.

Selbstverständlich kann ein derartiger Fahrzeugsitz 100 im aufgeklappten Zustand, also wenn er im vorderen Bereich der Nutzfahrzeugkabine 65 in seinem regulären Fahrzustand angeordnet ist, mittels zusätzlicher, hier nicht gezeigter Elemente arretiert werden, um die Fahrsicherheit für die Person zu gewährleisten.

Ebenso kann dieser Fahrzeugsitz 100 im eingeklappten Zustand, wenn er nach hinten in den hinteren Bereich der Nutzfahrzeugkabine 65 unterhalb eines Schlafbettes 64 oder dergleichen angeordnet ist, ebenso arretiert werden. Dies kann mittels Hebel und entsprechend ausgebildeten Einrastelementen beispielsweise ermöglicht werden.

Die Schwenkachse 3 des, um welche das Rückenlehnenteil 4 nach vorne auf das Sitzteil 5 heruntergeklappt wird, ist erhöht angeordnet. Dies bedeutet, dass die Schwenkachse 3 im vorliegenden Fall mit links- und rechtsseitig nach oben sich erstreckenden Lagerschenkeln 6a, 6b gehalten wird, sodass die Schwenkachse 3 gegenüber dem Sitzteil 5 in Höhenrichtung Z einen Abstand aufweist.

Nur auf diese Weise finden Polsterelemente 20 des Rückenlehnenteils 4 und Polsterelemente 22 des Sitzteils 5 ausreichend Platz, wenn das Rückenlehnenteil 4 nach unten geklappt wird. Hierdurch wird ermöglicht, dass sich das Rückenlehnenteil 4 wirklich in horizontaler Richtung befindet und die Polsterelemente 20, 22 sich nicht hindernd beim Herabklappen des Rückenlehnenteils 4 bzw. beim Herunterschwenken des Rückenlehnenteils entgegenstehen.

Die Schwenkachse 3 ist in horizontaler Richtung verlaufend hinter dem Rückenlehnenteil 4 angeordnet und hält zugleich das gesamte Rückenlehnenteil 4. Das Rückenlehnenteil 4 ist von dem Sitzteil getrennt angeordnet. Dies wird auch deutlich in den Figuren wiedergegeben, welche zudem eine Zentralstruktur 4 zeigt, die sich dadurch auszeichnet, dass sie von der Schwenkachse 3 im unteren Bereich erstreckend nach oben verläuft und somit durch eine zentral angeordnete mittlere Struktur mit seitlich sich davon wegstreckenden Strukturelementen eine handliche und platzsparende Rückenlehnenstruktur ermöglicht. Der Schulterbereich und der darunter liegende Rückenlehnenbereich sind getrennt mit Schalenelementen ausgebildet.

Das Rückenlehenelement 4 ist bevorzugt aus Aluminium oder einer Aluminiumlegierung gestaltet, um ein entsprechendes niedriges Gewicht zu erhalten. Die bereits erwähnten sich nach oben erstreckenden seitlich angeordneten Schenkel 6a, 6b weisen an ihrer Oberseite Lagerelemente, beispielsweise in Form von Kugellagern auf, um die Schwenkachse 3, beziehungsweise die Basisstruktur 2, endseitig darin lagern zu können. Ebenso sind die sich nach oben erstreckenden Schenkel 6a, 6b optional mit Armlehnen 13 versehen. Diese können ebenso schwenkbar angeordnet sein. Die sich nach oben erstreckenden Schenkelelemente 6a,6b können ebenso U-förmig als einstückiges Element zusammen mit Anteilen des Sitzteils 5 bzw. einer Sitzplatte verbunden sein.

In Fig. 28 ist der Fahrzeugsitz 100 von oben dargestellt. Deutlich ist die Rückenlehne 4 zu sehen, die die Strukturelemente im rückwärtigen Bereich der Rückenlehne 4 aufweist. Ebenso ist die Schwenkachse 3 wiedergegeben, die in den sich nach oben erstreckenden Schenkelelemente 6a, 6b gelagert ist. Das Sitzteil 5 ist ebenso zu erkennen.

### Bezugszeichenliste

- 100: Fahrzeugsitz
- 1: Zentralstruktur
- 1a, 1b: Stützelemente
- 1c: unterer Bereich der Zentralstruktur
- 2: Basisstruktur
- 2a, 2b: äußerer Rand der Basisstruktur
- 3: erste Schwenkachse
- 3a, 3b: Schwenkrichtung
- 4: Rückenlehnenelement
- 4a: unterer Teil des Rückenlehnenelements
- 4b: oberer Teil des Rückenlehnenelements
- 5: Sitzteil
- 5a, 5b: äußerer Rand des Sitzteils
- 6: Haltestruktur
- 6a, 6b: Halteschenkel
- 6c: Querverstrebung der Haltestruktur
- 7a, 7b: Schwenklagerung
- 8: Stabilitätselement
- 9: Kopfstützenteil
- 9a: Rippenstruktur
- 10a: zweite Schwenkachse bezüglich der Verschwenkung des ersten plattenartigen Elements
- 10b: dritte Schwenkachse bezüglich der Verschwenkung der Rippenelemente
- 10c: vierte Schwenkachse bezüglich der Verschwenkung des zweiten plattenartigen Elements
- 10d: fünfte Schwenkachse bezüglich der Verschwenkung des zweiten plattenartigen Elements
- 11: Pfeilrichtung
- 12: erstes plattenartiges Element
- 12a: unterer Abschnitt des ersten plattenartigen Elements
- 12b: oberer Abschnitt des ersten plattenartigen Elements
- 13: Armelement
- 13a: unterer Abschnitt des ersten Armelements
- 13b: Übergangsabschnitt
- 13c: oberer Abschnitt des ersten Armelements
- 14: Gelenkelement
- 15: Pfeil
- 16a, 16b: Doppelpfeil
- 17a, 17b: Lagerwellenelement
- 18a, 18b: Rippenelemente
- 19: zweites plattenartiges Element des Kopfstützenteiles
- 20: Polsterelement
- 20a: Polsterelement
- 20b: Polsterelement
- 21: Rückenlehne
- 22: Polsterelement des Sitzteils
- 23: Aufnahmeelement des Sitzteils
- 24: Abdeckungseinrichtung des Sitzunterbaus
- 25: mittlerer Abschnitt der Basisstruktur
- 26a, 26b: seitliche Abschnitte der Basisstruktur
- 27a, 27b: Aufnahmeabschnitte der Basisstruktur
- 28a, 28b: Sicherungselement
- 29a, 29b: Armlehne
- 30a, 30b: Seitenflächen der Stützelemente
- 31: Polsterelement
- 32: Sitzunterbau
- 33: Karosserie
- 34: Scherengestell
- 35: Federungsvorrichtung
- 36: Dämpfervorrichtung
- 37: Abstand
- 38: Abstand
- 39: Führungseinrichtung
- 39a, 39b: U-Schenkel
- 40: zweites Armelement
- 41: Feststelleinrichtung
- 42: Führungsstift
- 43: Vorsprünge
- 44: Ausnehmung
- 45: Federvorrichtung
- 45a: Schiene
- 45b: Federelemente
- 46: Endaufnahme
- 47: Führungsnut
- 48: Stifte
- 49: Führung
- 50: Verriegelungseinrichtung
- 51: blattartiges Element
- 52: Führungssystem
- 53: Pfeil
- 54: Feststellmechanismus
- 55: Grundelement
- 56: Betätigungselement
- 56a: hinterer Abschnitt des Betätigungselements
- 57: Zahnelement
- 57a: Zahnabschnitt des Zahnelements
- 58: Riegelelement
- 59: Rotationsachse
- 60: Rotationsachse
- 61: Pfeil
- 62: Vorsprung
- 63: Pfeil
- 64: Ablage oder Bett
- 65: Nutzfahrzeugkabine
- 66: unteres Schienenelement
- 67: oberes Schienenelement
- 68: Arretierungseinrichtung
- 69: Bowdenzug
- 70: Hebelelement
- 71: Hebelelement
- 72: Befestigungselement
- 73: Rückstellelement

- X: Tiefenachse
- Y: Breitenachse
- Z: Höhenachse
- X': Tiefenachse
- Y': Breitenachse
- Z': Höhenachse
- S: Schwenkachse
- α: Winkel

## Patentansprüche

1. Fahrzeugsitz (100) mit einer Erstreckung entlang einer Höhenachse Z und einer Breitenachse Y, umfassend ein Sitzteil (5) und ein Rückenlehnenelement (4), welches sich entlang einer Höhenachse Z' und in einer Breitenachse Y' erstreckt, wobei das Rückenlehnenelement (4) eine sich entlang der Höhenachse Z' erstreckende Zentralstruktur (1, 1a, 1b) aufweist, welche entlang der Breitenachse Y' mittig angeordnet ist und in einer sich im Wesentlichen entlang der Breitenachse Y' erstreckenden Basisstruktur (2) mündet, wobei das Rückenlehnenelement (4) zumindest ein Stabilitätselement (8) aufweist, welches sich entlang der Breitenachse Y' von der Zentralstruktur (1, 1a, 1b) wegerstreckt, wobei die Basisstruktur (2) in einer Haltestruktur (6) des Fahrzeugsites (100) schwenkbar angeordnet ist, so dass das Rückenlehnenelement (4) um eine erste Schwenkachse (3) schwenkbar ist,
**dadurch gekennzeichnet, dass**
die erste Schwenkachse (3) entlang einer Höhenachse Z des Fahrzeugsitzes von dem Sitzteil (5) beabstandet ist, wobei das Rückenlehnenelement (4) einen unteren Teil (4a), welcher entlang der Höhenachse Z' unter der ersten Schwenkachse (3) angeordnet ist und einen oberen Teil (4b), welcher entlang der Höhenachse Z' über der ersten Schwenkachse (3) angeordnet ist umfasst.

2. Fahrzeugsitz (100) nach Anspruch 1,
**dadurch gekennzeichnet, dass**
die Haltestruktur (6) zwei sich entlang der Höhenachse Z erstreckende Halteschenkel (6a, 6b) aufweist, wobei die Halteschenkel (6a, 6b) am Sitzteil (5) an jeweils einem entlang der Breitenachse Y äußeren Rand (5a, 5b) des Sitzteils (5) angeordnet sind, wobei die Haltestruktur (6) U-förmig ausgebildet ist, wobei die Haltestruktur (6) eine sich entlang der Breitenachse Y erstreckende Querverstrebung (6c) aufweist, welche die Halteschenkel (6a, 6b) verbindet.

3. Fahrzeugsitz (100) nach einem der vorhergehenden Ansprüche,
**dadurch gekennzeichnet, dass**
die Basisstruktur (2) formstabil ausgebildet ist, wobei die Basisstruktur (2) an seinen entlang der Breitenachse Y' äußeren Rändern (2a, 2b) ein Lagerwellenelement (17a, 17b) aufweist, welches in einer Schwenklagerung (7a, 7b) eines Halteschenkels (6a, 6b) angeordnet ist.

4. Fahrzeugsitz (100) nach einem der vorhergehenden Ansprüche,
**dadurch gekennzeichnet, dass**
der Fahrzeugsitz (100) einen Verriegelungsmechanismus umfasst, mittels welchem die Schwenkung des Rückenlehnenelementes (4) um die erste Schwenkachse (3) verriegelbar ist.

5. Fahrzeugsitz (100) nach einem der vorhergehenden Ansprüche,
**dadurch gekennzeichnet, dass**
der Fahrzeugsitz (100) einen Rückstellmechanismus umfasst, mittels welchem eine Schwenkung des Rückenlehnenelementes (4) um die erste Schwenkachse (3) zu einer Ausgangsposition hin rückstellbar ist.

6. Fahrzeugsitz (100) nach einem der vorhergehenden Ansprüche,
**dadurch gekennzeichnet, dass**
das Rückenlehnenelement (4) ein Stabilitätselement (8) in Form eines ersten plattenartigen Elementes (12) umfasst, wobei das erste plattenartige Element (12) entlang der Höhenachse Z' in einem unteren Bereich (1c) der Zentralstruktur (1) angeordnet ist, wobei das erste plattenartige Element (12) sich entlang der Höhenachse Z' des Rückenlehnenelementes (4) über die Schwenkachse (3) hinaus in Richtung des Sitzteils (5) erstreckt, wobei der untere Teil (4a) des Rückenlehnenelementes (4) der über die Schwenkachse (3) hinausragende untere Abschnitt (12a) des ersten plattenartigen Elements (12) ist.

7. Fahrzeugsitz (100) nach Anspruch 6,
**dadurch gekennzeichnet, dass**
das erste plattenartige Element (12) schwenkbar an der Zentralstruktur angeordnet ist und/oder zumindest abschnittsweise flexibel ausgebildet ist, wobei eine Verschwenkung und/oder eine Verformung des ersten plattenartigen Elementes (12) in radialer Richtung um eine zweite Schwenkachse (10a) ermöglicht ist, wobei die zweite Schwenkachse (10a) sich im Wesentlichen entlang der Höhenachse Z' erstreckt.

8. Fahrzeugsitz (100) nach einem der vorhergehenden Ansprüche,
**dadurch gekennzeichnet, dass**
die Zentralstruktur (1, 1a, 1b) zumindest ein sich entlang der Höhenachse Z' erstreckendes Stützelement (1a, 1b) aufweist, das unterseitig mit der Basisstruktur (2) verbunden ist, wobei die Zentralstruktur (1, 1a, 1b) zwei sich entlang der Höhenachse Z' erstreckende Stützelemente (1a, 1b) aufweist, die unterseitig mit der Basisstruktur (2) verbunden sind, wobei die Stützelemente (1a, 1b) entlang der Breitenachse Y' beabstandet sind.

9. Fahrzeugsitz (100) nach einem der vorhergehenden Ansprüche,
**dadurch gekennzeichnet, dass**
das Rückenlehnenelement (4) zwei Stabilitätselemente (8) aufweist, welche in Form von Rippenelementen (18a, 18b) ausgebildet sind, wobei die Rippenelemente (18a, 18b) entlang der Höhenachse Z' über dem ersten plattenartigen Element (12) angeordnet sind, wobei die Rippenelemente (18a, 18b) jeweils eine Erstreckung entlang der Breitenachse Y' aufweisen, wobei ein erstes Rippenelement (18a) sich in entgegengesetzter Richtung zu dem zweiten Rippenelement (18b) erstreckt, wobei die Rippenelemente (18a, 18b) an der Zentralstruktur (1, 1a, 1b) angeordnet sind oder mit dieser integral ausgebildet sind, wobei je ein Rippenelement (18a, 18b) an einem Stützelement (1a, 1b) angeordnet ist oder je ein Rippenelement (18a, 18b) mit einem Stützelement (1a, 1b) integral ausgebildet ist.

10. Fahrzeugsitz (100) nach einem der vorhergehenden Ansprüche,
**dadurch gekennzeichnet, dass**
ein Kopfstützenteil (9) an der Zentralstruktur (1) angeordnet ist, wobei das Kopfstützenteil (9) entlang der Höhenachse Z' über den Rippenelementen (18a, 18b) angeordnet ist, wobei Kopfstützenteil (9) entlang der Höhenachse Z' verlagerbar ist, wobei Kopfstützenteil (9) mittels eines ersten Armelements (13) an der Zentralstruktur (1) angeordnet ist, wobei das Armelement (13) zwischen den Stützelementen (1a, 1b) entlang der Höhenachse Z' verlagerbar angeordnet ist.

11. Fahrzeugsitz (100) nach Anspruch 10,
**dadurch gekennzeichnet, dass**
das Kopfstützenteil (9) entlang der Höhenachse Z' verlagerbar ist, wobei an dem ersten Armelement (13) eine Führungseinrichtung (39) vorgesehen ist, in welcher ein zweites Armelement (40) entlang der Höhenachse Z' geführt ist, wobei eine vorgegebene Höhenposition des zweiten Armelements (40) durch eine Feststelleinrichtung (41) festlegbar ist, wobei an dem zweiten Armelement (40) ein zweites plattenartiges Element (19) angeordnet ist.

12. Fahrzeugsitz (100) nach einem der Ansprüche 10 bis 11,
**dadurch gekennzeichnet, dass**
zumindest ein Führungsstift (42) an dem zweiten Armelement (40) vorgesehen ist, wobei der Führungsstift (42) in der Führungseinrichtung (41) geführt ist, wobei die Feststelleinrichtung (41) eine vorgegebene Anzahl an Vorsprüngen (43) aufweist, welche komplementär zu einer an dem Führungsstift (42) vorgesehen Ausnehmung (44) ausgebildet sind, wobei in einer Feststellposition eine Federvorrichtung (45) einen Vorsprung (43) in die Ausnehmung (44) des Führungsstifts (42) presst, wobei die Führungseinrichtung (39) eine Endaufnahme (46) für den zumindest einen Führungsstift (42) umfasst, in welcher eine Rotation des Führungsstifts (42) und des zweiten Armelements (40) um eine Schwenkachse S ermöglicht wird, wobei die Schwenkachse S sich entlang der Breitenachse Y' erstreckt, wobei durch die Schwenkung des zweiten Armelements (40) das zweite plattartige Element (19) entlang der Tiefenachse X' nach vorne verschwenkbar ist.

13. Fahrzeugsitz (100) nach einem der Ansprüche 10 bis 12,
**dadurch gekennzeichnet, dass**.
das Kopfstützenteil (9) ein zweites plattenartiges Element (19) aufweist, wobei das zweite plattenartige Element (19) mittels eines Gelenkelements (14) an dem ersten (13) oder dem zweiten Armelement (40) angeordnet ist, wobei das zweite plattenartige Element (19) um eine vierte Schwenkachse (10c), welche im Wesentlichen entlang der Höhenachse Z' verläuft, schwenkbar ist, wobei das zweite plattenartige Element (19) um eine fünfte Schwenkachse (10d), welche im Wesentlichen entlang der Breitenachse Y' verläuft, schwenkbar ist.

14. Nutzfahrzeugkabine (65) mit einem Fahrzeugsitz (100) nach einem der vorhergehenden Ansprüche 1 bis 14, wobei der Fahrzeugsitz (100) mittels eines Führungssystems (52) verlagerbar in der Nutzfahrzeugkabine (65) angeordnet ist.

## Claims

1. Vehicle seat (100) having an extension along a height axis Z and a width axis Y, comprising a seat part (5) and a backrest element (4) which extends along a height axis Z' and in a width axis Y',
wherein the backrest element (4) has, extending along the height axis Z', a central structure (1, 1a, 1b) which is arranged centrally along the width axis Y' and opens into in a base structure (2) extending substantially along the width axis Y', wherein the backrest element (4) has at least one stability element (8) which extends along the width axis Y' away from the central structure (1, 1a, 1b), wherein the base structure (2) is pivotally arranged in a support structure (6) of the vehicle seat (100), so that the backrest element (4) is pivotable about a first pivot axis (3),
**characterised in that**
the first pivot axis (3) is spaced apart from the seat part (5) along a height axis Z of the vehicle seat, wherein the backrest element (4) comprises a lower part (4a), which is arranged along the height axis Z' below the first pivot axis (3), and an upper part (4b), which is arranged along the height axis Z' above the first pivot axis (3).

2. A vehicle seat (100) according to claim 1,
**characterised in that**
the support structure (6) has two support legs (6a, 6b) extending along the height axis Z, wherein the support legs (6a, 6b) are arranged on the seat part (5) in each case on an outer edge (5a, 5b) of the seat part (5) along the width axis Y, wherein the support structure (6) is U-shaped, wherein the support structure (6) has a transverse strut (6c) extending along the width axis Y, which connects the support legs (6a, 6b).

3. A vehicle seat (100) according to any of the preceding claims,
**characterised in that**
the base structure (2) is dimensionally stable, wherein the base structure (2), at its outer edges (2a, 2b), along the width axis Y', has a bearing shaft element (17a, 17b), which is arranged in a pivot bearing (7a, 7b) of a support leg (6a, 6b).

4. A vehicle seat (100) according to any of the preceding claims,
**characterised in that**
the vehicle seat (100) comprises a locking mechanism, by means of which the pivoting of the backrest element (4) about the first pivot axis (3) can be locked.

5. A vehicle seat (100) according to any of the preceding claims,
**characterised in that**
the vehicle seat (100) comprises a reset mechanism, by means of which a pivotingof the backrest element (4) about the first pivot axis (3) can be reset to an starting position.

6. A vehicle seat (100) according to any of the preceding claims,
**characterised in that**
the backrest element (4) comprises a stability element (8) in the form of a first plate-like element (12), wherein said first plate-like element (12) is arranged along the height axis Z' in a lower region (1c) of the central structure (1), wherein the first plate-like element (12) extends along the height axis Z' of the backrest element (4) beyond the pivot axis (3) in the direction of the seat part (5), wherein the lower part (4a) of the backrest element (4) is the lower portion (12a) of the first plate-like element (12) projecting beyond the first pivot axis (3).

7. A vehicle seat (100) according to claim 6,
**characterised in that**
the first plate-like element (12) is pivotably arranged on the central structure and/or is flexible at least partially, wherein a pivoting and/or a deformation of the first plate-like element (12) is made possible in the radial direction about a second pivot axis (10a), wherein the second pivot axis (10a) extends substantially along the height axis Z'.

8. A vehicle seat (100) according to any of the preceding claims,
**characterised in that**
the central structure (1, 1a, 1b) has at least one support element (1a, 1b) extending along the height axis Z', which is connected on the underside to the base structure (2), wherein the central structure (1, 1a, 1b) has two support elements (1a, 1b) extending along the height axis Z', which are connected on the underside to the base structure (2), wherein the support elements (1a, 1b) are spaced apart along the width axis Y'.

9. A vehicle seat (100) according to any of the preceding claims,
**characterised in that**
the backrest element (4) has two stability elements (8) which are designed in the form of rib elements (18a, 18b), wherein the rib elements (18a, 18b) are arranged along the height axis Z' above the first plate-like element (12), wherein the rib elements (18a, 18b) each have an extension along the width axis Y', wherein a first rib element (18a) extends in the opposite direction to the second rib element (18b), wherein the rib elements (18a, 18b) are arranged on the central structure (1, 1a, 1b) or formed integrally therewith, wherein one rib element (18a, 18b) each is arranged on a support element (1a, 1b) or one rib element (18a, 18b) each is integrally formed with a support element (1a, 1b).

10. A vehicle seat (100) according to any of the preceding claims,
**characterised in that**
a headrest part (9) is arranged on the central structure (1), wherein the headrest part (9) is arranged along the height axis Z' above the rib elements (18a, 18b), wherein the headrest part (9) is displaceable along the height axis Z', wherein the headrest part (9) is arranged on the central structure (1) by means of a first arm element (13), wherein the arm element (13) is arranged displaceably between the support elements (1a, 1b) along the height axis Z'.

11. A vehicle seat (100) according to claim 10,
**characterised in that**
the headrest part (9) is displaceable along the height axis Z', wherein, on said first arm element (13), a guide device (39) is provided, in which a second arm element (40) is guided along the height axis Z', wherein a predetermined height position of the second arm element (40) is fixable by a fixation device (41), wherein a second plate-like element (19) is arranged on the second arm element (40).

12. A vehicle seat (100) according to claim 10 to 11,
**characterised in that**
at least one guide pin (42) is provided on the second arm element (40), wherein the guide pin (42) is guided in the guide device (41), wherein the fixation device (41) has a predetermined number of projections (43), which are complementary to a recess (44) provided on the guide pin (42), wherein, in a fixation position, a spring device (45) presses a projection (43) into the recess (44) of the guide pin (42), wherein the guide device (39) comprises an end receptacle (46) for the at least one guide pin (42), within which a rotation of the guide pin (42) and of the second arm element (40) is made possible about a pivot axis S, wherein the pivot axis S extends along the width axis Y', wherein by the pivoting of the second arm element (40), the second plate-like element (19) is forwardly pivotable along the depth axis X'.

13. A vehicle seat (100) according to any of claims 10 to 12,
**characterised in that**
the headrest part (9) comprises a second plate-like element (19), wherein the second plate-like element (19) is arranged by means of a hinge element (14) on the first (13) or the second arm element (40), wherein the second plate-like element (19) is pivotable about a fourth pivot axis (10c) which extends substantially along the height axis Z', wherein the second plate-like element (19) is pivotable about a fifth pivot axis (10d), which extends substantially along the width axis Y'.

14. Commercial vehicle cabin (65) having a vehicle seat (100) according to any of the preceding claims 1 to 13, wherein the vehicle seat (100) is arranged to be displaceable in the commercial vehicle cabin (65) by means of a guide system (52).

## Revendications

1. Siège de véhicule (100) ayant une étendue le long d'un axe dans le sens de la hauteur Z et d'un axe dans le sens de la largeur Y, comportant une partie assise (5) et un élément dossier (4), lequel s'étend le long d'un axe dans le sens de la hauteur Z' et d'un axe dans le sens de la largeur Y', dans lequel l'élément dossier (4) présente une structure centrale (1, 1a, 1b) s'étendant le long de l'axe dans le sens de la hauteur Z', laquelle est disposée de façon centrale le long de l'axe dans le sens de la largeur Y' et débouche dans une structure de base (2) s'étendant sensiblement le long de l'axe dans le sens de la largeur Y', dans lequel l'élément dossier (4) présente au moins un élément de stabilité (8), lequel s'étend à partir de la structure centrale (1, 1a, 1b) le long de l'axe dans le sens de la largeur Y', dans lequel la structure de base (2) est disposée apte à pivoter dans une structure de maintien (6) du siège de véhicule (100), de telle sorte que l'élément dossier (4) est apte à pivoter autour d'un premier axe de pivotement (3),
**caractérisé par le fait que**
le premier axe de pivotement (3) est espacé de la partie assise (5) le long d'un axe dans le sens de la hauteur Z du siège du véhicule, l'élément dossier (4) comportant une partie inférieure (4a), laquelle est disposée au-dessous du premier axe de pivotement (3) le long de l'axe dans le sens de la hauteur Z', et une partie supérieure (4b), laquelle est disposée au-dessus du premier axe de pivotement (3) le long de l'axe dans le sens de la hauteur Z'.

2. Siège de véhicule (100) selon la revendication 1,
**caractérisé par le fait que**
la structure de maintien (6) présente deux branches de maintien (6a, 6b) s'étendant le long de l'axe dans le sens de la hauteur Z, les branches de maintien (6a, 6b) étant disposés sur la partie assise (5) sur respectivement un bord externe (5a, 5b) de la partie assise (5) le long de l'axe dans le sens de la largeur Y, la structure de maintien (6) étant réalisée en forme de U, la structure de maintien (6) présentant une traverse (6c) s'étendant le long de l'axe dans le sens de la largeur Y, laquelle relie les branches de maintien (6a, 6b).

3. Siège de véhicule (100) selon l'une des revendications précédentes,
**caractérisé par le fait que**
la structure de base (2) est réalisée dimensionnellement stable, la structure de base (2) présentant, sur ses bords externes (2a, 2b) le long de l'axe dans le sens de la largeur Y', un élément arbre de palier (17a, 17b), lequel est disposé dans un palier pivotant (7a, 7b) d'une branche de maintien (6a, 6b).

4. Siège de véhicule (100) selon l'une des revendications précédentes,
**caractérisé par le fait que**
le siège de véhicule (100) comporte un mécanisme de verrouillage au moyen duquel le pivotement de l'élément dossier (4) autour du premier axe de pivotement (3) est verrouillable.

5. Siège de véhicule (100) selon l'une des revendications précédentes,
**caractérisé par le fait que**
le siège de véhicule (100) comporte un mécanisme de rappel au moyen duquel un pivotement de l'élément dossier (4) autour du premier axe de pivotement (3) est apte à être rappelé à une position initiale.

6. Siège de véhicule (100) selon l'une des revendications précédentes,
**caractérisé par le fait que**
l'élément dossier (4) comporte un élément de stabilité (8) sous forme d'un premier élément en forme de plaque (12), le premier élément en forme de plaque (12) étant disposé dans une région inférieure (1c) de la structure centrale (1) le long de l'axe dans le sens de la hauteur Z', le premier élément en forme de plaque (12) s'étendant au-delà de l'axe de pivotement (3) en direction de la partie assise (5) le long de l'axe dans le sens de la hauteur Z' de l'élément dossier (4), la partie inférieure (4) de l'élément dossier (4) étant la section inférieure (12a) du premier élément en forme de plaque (12) en saillie au-delà de l'axe de pivotement (3).

7. Siège de véhicule (100) la revendication 6,
**caractérisé par le fait que**
le premier élément en forme de plaque (12) est disposé apte à pivoter sur la structure centrale et/ou est réalisé flexible au moins par sections, un pivotement et/ou une déformation du premier élément en forme de plaque (12) étant possible autour d'un second axe de pivotement (10a) dans la direction radiale, le second axe de pivotement (10a) s'étendant sensiblement le long de l'axe dans le sens de la hauteur Z'.

8. Siège de véhicule (100) selon l'une des revendications précédentes,
**caractérisé par le fait que**
la structure centrale (1, 1a, 1b) présente au moins un élément d'appui (1, 1a, 1b) s'étendant le long de l'axe dans le sens de la hauteur Z', qui est relié côté inférieur avec la structure de base (2), la structure centrale (1, 1a, 1b) présentant deux éléments d'appui (1a, 1b) s'étendant le long de l'axe dans le sens de la hauteur Z', qui sont reliés côté inférieur avec la structure de base (2), les éléments d'appui (1a, 1b) étant espacés le long de l'axe dans le sens de la largeur Y'.

9. Siège de véhicule (100) selon l'une des revendications précédentes,
**caractérisé par le fait que**
l'élément dossier (4) présente deux éléments de stabilité (8), qui sont réalisés sous forme d'éléments ailettes (18a, 18b), les éléments ailettes (18a, 18b) étant disposés au-dessus du premier élément en forme de plaque (12) le long de l'axe dans le sens de la hauteur Z, les éléments ailettes (1, 1a, 1b) présentant chacun une étendue le long de l'axe dans le sens de la largeur Y', un premier élément ailette (18a) s'étendant en direction opposée par rapport au second élément ailette (18b), les éléments ailettes (18a, 18b) étant disposés sur la structure centrale (1, 1a, 1b) ou étant formés d'un seul tenant avec celle-ci, chaque élément ailette (18a, 18b) étant disposé sur un élément d'appui (1a, 1b) ou chaque élément ailette (18b) étant formé d'un seul tenant avec un élément d'appui (1a, 1b).

10. Siège de véhicule (100) selon l'une des revendications précédentes,
**caractérisé par le fait qu'**
une partie appui-tête (9) est disposée sur la structure centrale (1), la partie appui-tête (9) étant disposée au-dessus des éléments ailettes (18a, 18b) le long de l'axe dans le sens de la hauteur Z', la partie appui-tête (9) étant déplacable le long de l'axe dans le sens de la hauteur Z', la partie appui-tête (9) étant disposée sur la structure centrale (1) au moyen d'un premier élément bras (13), l'élément bras (13) étant disposé déplaçable le long de l'axe dans le sens de la hauteur Z' entre les éléments d'appui (1a, 1b).

11. Siège de véhicule (100) selon la revendication 10,
**caractérisé par le fait que**
la partie appui-tête (9) est déplaçable le long de l'axe dans le sens de la hauteur Z', un dispositif de guidage (39) étant prévu sur le premier élément bras (13), dispositif dans lequel un second élément bras (40) est guidé le long de l'axe dans le sens de la hauteur Z', une position en hauteur prédéfinie du second élément bras (40) étant apte à être fixée par un dispositif de blocage (41), un second élément en forme de plaque (19) étant disposé sur le second élément bras (40).

12. Siège de véhicule (100) selon l'une des revendications 10 ou 11,
**caractérisé par le fait qu'**
au moins une broche de guidage (42) est prévue sur le second élément bras (40), la broche de guidage (42) étant guidée dans le dispositif de guidage (41), le dispositif de blocage (41) présentant un nombre prédéfini de saillies (43), lesquelles sont réalisées de façon complémentaire à un renfoncement (44) prévu sur la broche de guidage (42), où, dans une position de blocage, un dispositif à ressort (45) presse une saillie (43) dans le renfoncement (44) de la broche de guidage (42), le dispositif de guidage (39) comportant un logement d'extrémité (46) pour ladite au moins une broche de guidage (42), dans lequel une rotation de la broche de guidage (42) et du second élément bras (40) autour d'un axe de pivotement S est rendue possible, l'axe de pivotement S s'étendant le long de l'axe dans le sens de la largeur Y', le second élément en forme de plaque (19) étant apte à pivoter vers l'avant le long de l'axe dans le sens de la profondeur X' par le pivotement du second élément bras (40).

13. Siège de véhicule (100) selon l'une des revendications 10 à 12,
**caractérisé par le fait que**
la partie appui-tête (9) présente un second élément en forme de plaque (19), le second élément en forme de plaque (19) étant disposé sur le premier (13) ou le second (40) élément bras au moyen d'un élément d'articulation (14), le second élément en forme de plaque (19) étant apte à pivoter autour d'un quatrième axe de pivotement (10c), lequel s'étend sensiblement le long de l'axe dans le sens de la hauteur Z', le second élément en forme de plaque (19) étant apte à pivoter autour d'un cinquième axe de pivotement (10d), lequel s'étend sensiblement le long de l'axe dans le sens de la largeur Y'.

14. Cabine de véhicule utilitaire (65) comportant un siège de véhicule (100) selon l'une des revendications préédentes 1 à 14, le siège de véhicule (100) étant disposé dans la cabine de véhicule utilitaire (65) déplaçable au moyen d'un système de guidage (52).
